Europäisches Patentamt

European Patent Office

Office européen des brevets

(11) Publication number: **0 215 454**
**B1**

# (12) EUROPEAN PATENT SPECIFICATION

(45) Date of publication of patent specification: **31.01.90**

(21) Application number: **86112639.9**

(22) Date of filing: **12.09.86**

(51) Int. Cl.$^5$: **G 01 D 5/20**

(54) Position detecting apparatus utilizing a magnetic sensor.

(30) Priority: **13.09.85 JP 202832/85**
**20.01.86 JP 9566/86**
**20.01.86 JP 9569/86**
**20.01.86 JP 9570/86**
**20.02.86 JP 36351/86**
**10.03.86 JP 50541/86**
**31.03.86 JP 73223/86**

(43) Date of publication of application:
**25.03.87 Bulletin 87/13**

(45) Publication of the grant of the patent:
**31.01.90 Bulletin 90/05**

(84) Designated Contracting States:
**DE FR GB NL**

(56) References cited:
**DE-A-2 134 860**
**DE-B-2 325 752**

(73) Proprietor: **FUJITSU LIMITED**
**1015, Kamikodanaka Nakahara-ku**
**Kawasaki-shi Kanagawa 211 (JP)**

(72) Inventor: **Fujiwara, Yoshiro FUJITSU LIMITED**
**Patent Dpt.**
**Kosugi Fujitsu Building 1812-10 Shimonumabe**
**Nakahara-ku Kawasaki-shi Kanagawa 211 (JP)**
Inventor: **Hirano, Akira FUJITSU LIMITED**
**Patent Dpt.**
**Kosugi Fujitsu Building 1812-10 Shimonumabe**
**Nakahara-ku Kawasaki-shi Kanagawa 211 (JP)**
Inventor: **Endo, Michiko FUJITSU LIMITED**
**Patent Dpt.**
**Kosugi Fujitsu Building 1812-10 Shimonumabe**
**Nakahara-ku Kawasaki-shi Kanagawa 211 (JP)**
Inventor: **Kojima, Yuji FUJITSU LIMITED Patent**
**Dpt.**
**Kosugi Fujitsu Building 1812-10 Shimonumabe**
**Nakahara-ku Kawasaki-shi Kanagawa 211 (JP)**
Inventor: **Wakatsuki, Noboru FUJITSU LIMITED**
**Patent Dpt.**
**Kosugi Fujitsu Building 1812-10 Shimonumabe**
**Nakahara-ku Kawasaki-shi Kanagawa 211 (JP)**
Inventor: **Komenou, Kazunari FUJITSU LIMITED**
**Patent Dpt.**
**Kosugi Fujitsu Building 1812-10 Shimonumabe**
**Nakahara-ku Kawasaki-shi Kanagawa 211 (JP)**

Courier Press, Leamington Spa, England.

**EP 0 215 454 B1**

(74) Representative: Sunderland, James Harry et al
HASELTINE LAKE & CO Hazlitt House 28
Southampton Buildings Chancery Lane
London WC2A 1AT (GB)

## Description

The present invention relates to an apparatus for locating or detecting the position of a body of interest, without contacting the body, with the aid of a magnetic sensor.

Various types of non-contact distance measuring instrument have been developed for measuring linear and angular displacement and detecting absolute position of a body in a linear scale or in an angular scale. Various approaches to the provision of non-contact measuring position detecting apparatus have been attempted. An instrument utilizing a sliding resistor potentiometer is a classical example of such apparatus, but is not satisfactorily reliable. An optical positioner has an optical sensor by which an optical scale such as a slit scale is read out, but its construction is rather complicated. There is further a magnetic scale wherein a scale written into a magnetic medium is read out by a magnetic sensor, but its structure is also complicated and absolute position cannot be measured; only the distance between two arbitrary points is measurable.

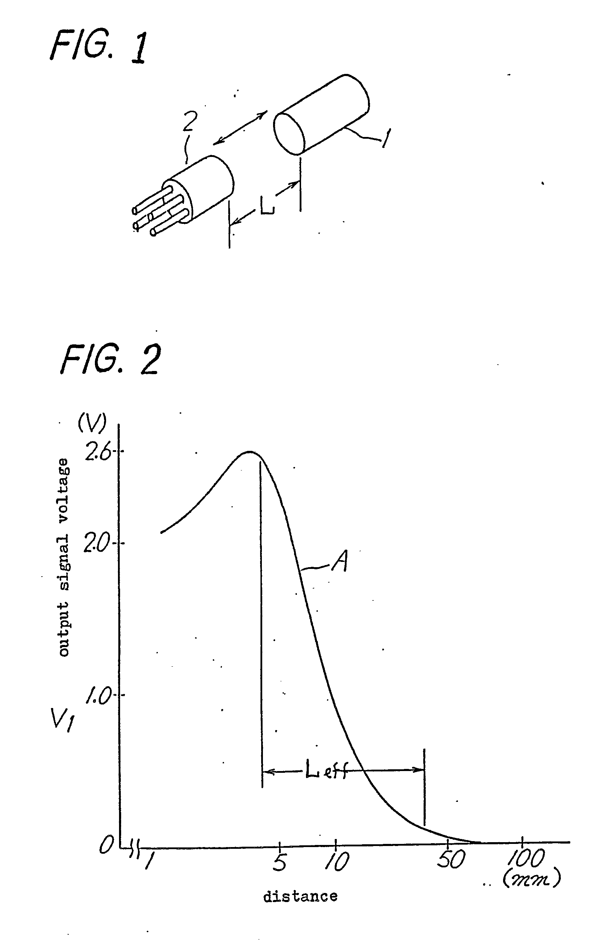

Fig. 1 is a schematic perspective view of a previously proposed position detecting apparatus (hereinafter simply a position detector), wherein a permanent magnet 1 is arranged facing a magnetic sensor 2, in parallel therewith, with the distance L therebetween variable; namely, relative movement of both members of the detector is allowed. It should be noted that the magnetic sensor 2 is transferred (moved) relatively against (with respect to) the permanent magnet 1 in the direction of the polar axis of magnet 1. The magnetic field emanating from the permanent magnet 1 is sensed with a sensitive magnetic sensing element involved in magnetic sensor 2. The distance L is detected and indicated by a representing signal output from the magnetic sensor 2.

Fig. 2 is a graphical diagram illustrating the relationship between the distance L and the output signal voltage of the magnetic sensor 2 of the previously proposed position detector of Fig. 1. Hereby, the coercive force of the permanent magnet 1 is 800 Oe and the magnetic sensing element of sensor 2 is made of a magnetoresistive thin film. The effective distance $L_{eff}$ wherein the characteristic curve shown in the diagram is fairly linear and available for practical measurement, is rather short, namely approximately 4 to 30 mm.

Various types of magnetic sensing element can be employed in a magnetic sensor, for example an element including a coil for sensing an induced magnetic field, a Hall effect semiconductor element, and a magnetoresistive element.

A magnetoresistive sensing element has the property of changing its resistivity in the presence of an external magnetic field. The element is stable with regard to changes in environmental temperature and is suitable for sensing a micro magnetic field.

Before proceeding further, there will be described briefly the structure of a magnetic sensor employing a magnetoresistive element which sensor is described in the Japanese provisional publication of patent application SH061-70478 by Hirano, published on 11th April 1986.

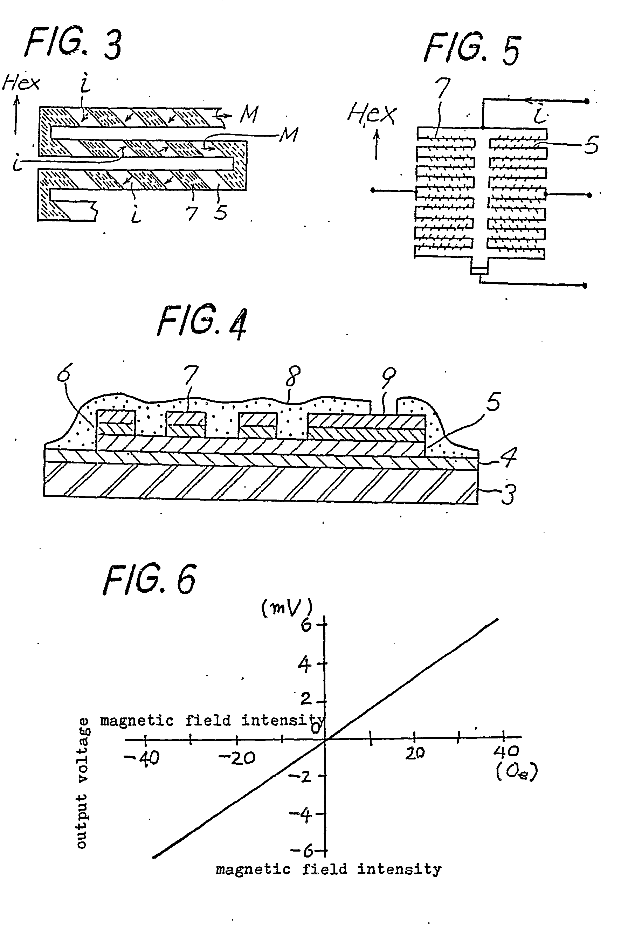

Fig. 3 is a partial plan view of a magnetic sensing element 5 and Fig. 4 is a cross-sectional view of a magnetic sensor 2.

Magnetic sensing element 5, as shown in Fig. 3, is patterned to a meandering pattern, from a magnetoresistive thin film of Permalloy (Fe-Ni) deposited on a silicon substrate 3 using a lithographic technology. The patterned magnetoresistive element is subject to a heat treatment to be magnetized in a longitudinal direction. Many striped gold conductive layers 7 obliquely crossing the meander pattern of the element 5 are deposited thereon, adhering to the magnetoresistive pattern through intermediate layers 6 of Ti or Cr, formed beforehand. An element of this configuration may be referred to as a 'barber-pole-type' element. Such elements are reported in various references, such as Electronic Components and Applications, on page 148, vol. 5, No. 3, June 1983, by U. Dibbern and A. Petersen.

The sensor is covered with a passivation film 8 for protection against environmental hazards and lead terminals 9 are formed on substrate 3. A particular feature of the element proposed by Hirano is that the striped pattern is formed over all the paths of the meandering element, including both outward and return paths. Usually such elements have the striped pattern formed in one side path only, as indicated in the report mentioned above.

Fig. 5 is a schematic plan view of four magnetoresistive sensing elements of barber-pole type, connected to form the four arms of a Wheatstone bridge having a pair of input and output terminals, being formed on a substrate 3. The degree of bridge imbalance is used to indicate the magnetic field intensity which is indicated by an arrow Hex in the Figure.

Fig. 6 is a characteristic diagram of a barber-pole-type magnetic sensor as illustrated in Fig. 3, 4 and 5, wherein external magnetic field intensity in Oe is taken on the abscissa and the output voltage of the sensor in mV on the ordinate. As can be seen from the diagram, the characteristic curve of the magnetic sensor is satisfactorily straight, and ranges from minus to plus. This means that the barber-pole-type magnetoresistive sensor has a sensing polarity peculiar to its magnetizing direction.

Since barber-pole-type elements sense magnetic flux only in parallel with the plane of the Permalloy strips, its sensitivity shows a sharp peak value when the magnetic sensing element 5 is positioned on a plane in parallel with the magnetic flux lines. This results in a fairly high resolution capability for the magnetic sensor, for detecting the position of a body of interest. On the other hand, accurate transferring motion of the magnetic sensor is required so that the plane of the magnetoresistive sensing element is kept always in parallel with the plane of magnetic flux lines to be sensed.

In the following description relating to embodiments of the present invention, the magnetic sensor employed will generally be assumed to have a barber-pole-type magnetoresistive sensing element. Therefore, a common reference numeral (15) is used for denoting a magnetic sensor appearing in the following description. Of course, embodiments of the invention can employ other types of sensing element.

A previously proposed position detector, as mentioned above, has a short sensing region. This is because the magnetic field to be sensed by magnetic sensor 2 emanates in a perpendicular direction with respect to the pole face of permanent magnet 1; in other words, the magnetic sensor 2 moves in the direction of the magnet pole axis. The magnetic field intensity in this direction, therefore, decreases very sharply with the distance from the pole surface, being inversely proportional to the square of the distance L.

DE-B-2 325 752 discloses position-detecting apparatus having an elongate rectangular yoke with a primary coil around one of the long limbs of the yoke and secondary coils wound around respective, opposite short limbs of the yoke. The primary coil is supplied with a.c. current, and the secondary coils detect flux in the closed magnetic circuit provided by tie yoke. A permanent magnet is movable between the long limbs of the yoke, in the directions of those limbs. The position, of the permanent magnet is derivable from differences between the fluxes detected by the secondary coils.

DE-A-2 134 860 discloses position-detecting apparatus having a yoke with a primary coil and two secondary coils, one of which secondary coils is fixed and the other of which is movable. A.C. current is supplied to the primary coil and the secondary coils detect resultant flux in the closed magnetic circuit provided by the yoke. The position of the movable coil is derivable from the differences between the fluxes detected by the secondary coils.

According to the present invention there is provided position-detecting apparatus, comprising a magnet and a yoke of magnetic material connected to form a closed magnetic circuit suffering leakage of magnetic flux having a non-uniform distribution of field intensity along the yoke, a sensor capable of sensing magnetic field, and transfer means capable of providing relative movement of the sensor along the yoke, whereby the position of the sensor along the yoke is determined from the magnetic field intensity of leakage flux detected by the sensor.

An embodiment of the present invention can provide a magnetic position detector having a relatively long measuring region or range.

An embodiment of the present invention can provide a position detector capable of detecting an absolute position of a body of interest.

An embodiment of the present invention can provide a magnetic position detector having not only a relatively simple and inexpensive construction but also a reliable measuring function.

An embodiment of the present invention can provide an improved magnetic position detector having a longer measuring range than a previously proposed detector. A position detector embodying the present invention has a closed magnetic circuit comprising one or more magnets and a yoke or a pair of yokes made of magnetic material. The major part of the magnetic flux emanating from the magnet is guided to circulate in the closed magnetic circuit through the yoke(s). A part of the magnetic flux emanates from the surfaces of the yoke(s) into the air space directed to both inside and outside of the closed magnetic circuit. This is referred to as leakage magnetic flux (hereinafter, simply leakage flux). The magnetic sensor is designed to move along one of the yoke surfaces which face the inside of the closed magnetic circuit, keeping some space therefrom, and to sense the magnetic leakage flux therein. A surface facing the inside of the closed magnetic circuit (hereinafter, inside surface) is chosen because the outside of the closed magnetic circuit is apt to be subject to external magnetic disturbances, such as the approach of another magnetic body, causing an erroneous measurement. In the following, throughout the description, the magnetic sensor, except as otherwise mentioned, is assumed to move along the inside surface of a yoke. The closed magnetic circuit is also designed so that the leakage flux there inside has a density distribution as linear as possible along the longitudinal direction of the yoke. A linear distribution of leakage flux density or leakage flux intensity along the longitudinal direction of the yoke assures a linear characteristic for output voltage of the magnetic sensor, as long as a high linearity magnetic sensor such as a barber-pole-type magnetic sensor is used. In embodiments of the present invention features intended to provide more or more nearly linear characteristics can be employed: for example, a yoke having a continuously reducing cross-sectional area along the longitudinal direction.

Embodiments of the present invention provide three types of position detector. A first type is a position detector having a pair of yokes, railroad-like yokes, which extend in accordance with a predetermined path such as a straight path, a circular path, an S-shaped path, etc. The inside surfaces of the yokes are set almost in parallel with each other. This type has an advantage in that path length for the relevant leakage flux starting from one side of the inside surface and reaching the other side, is almost constant, resulting in approximately constant air permeance for the leakage flux. This favourably affects the linearity of the position detector.

The second type has a single yoke except a U-type yoke, in which a permanent magnet is embedded. A single circle is one example of such a yoke. Simple structure is an advantage of this type, but linearity of measuring characteristics may be rather unsatisfactory.

The third type is a coaxial type wherein a pair of members, a tube and a rod, both of which are made of magnetic material, play the rôle of yokes. At one or both ends of each, one permanent magnet or a pair of permanent magnets is or are arranged, and a magnetic sensor transfers along the inner side wall of the tube (a yoke). This type has an advantage in that the magnetic sensor is completely shielded from external magnetic disturbances and also in that some rotating movement around transferring axis during the transferring of the magnetic sensor is allowed, because the magnetic field distribution of the leakage flux is quite symmetrical with respect to the axis. In addition, the mechanical structure of this type is rugged and dustproof.

In embodiments of the invention, several detailed features intended to offer improvement can be provided. For example, as coercive force generator, an electromagnetic coil can be introduced instead of permanent magnets. This serves to reduce external magnetic disturbances, by using a high-frequency alternating exciting currect for the coil, and further, it assists in avoiding difficult machining of permanent magnets which is required in some cases.

The forming of sharp protrusions on the inside surface of a yoke can serve to enhance the generation of leakage flux, allowing the use of a favourably weak coercive force.

With the aid of a relatively heavy enclosure covering a magnetic sensor of a magnetic position detector, it is possible to provide the magnetoresistive sensing element with a magnetizing characteristic exhibiting a hysteresis effect. This serves to suppress "chattering" of the magnetic sensor when the magnetic position detector is used as a switching means for a device such as a level meter of an oil tank of a car wherein repeated up and down movements of the position detector (used as a floating element) occur.

In summary, as can be understood from the above introduction, a position detector embodying the present invention is distinguished over previously proposed such detectors by the fact that leakage flux from an inside surface of a fairly long yoke is utilized for measuring the distance of the position of a body of interest, while in a previously proposed detector leakage flux directly emanating from a pole surface of a permanent magnet in the direction of the pole axis is utilized. As the result, the measuring range of a position detector embodying the present invention can be markably extended as compared with previously proposed detectors.

Reference is made, by way of example, to the accompanying drawings, in which:-

Fig. 1 is a schematic perspective view of a previously proposed position detector;

Fig. 2 is a graphical diagram, illustrating relationship between distance L and the output voltage of the magnetic sensor 2 of Fig. 1;

Fig. 3 is a schematic partial plan view illustrating the configuration of a barber-pole-type magnetic sensing element;

Fig. 4 is a schematic cross-sectional view illustrating the structure of a magnetic sensor using a sensing element as seen in Fig. 3;

Fig. 5 is a wiring diagram showing four barber-pole-type magnetic sensing elements connected in the four arms of a Wheatstone bridge;

Fig. 6 is a diagram illustrating characteristics of a barber-pole-type magnetic sensor as illustrated in Figs. 3, 4 and 5;

Fig. 7 is a schematic perspective view of a position detector in accordance with a first embodiment of the present invention, having a U-shaped yoke in its closed magnetic circuit;

Fig. 8 is a schematic front view of the detector of Fig. 7;

Fig. 9 is a schematic plan view of the detector of Fig. 7 illustrating magnetic flux paths therein;

Fig. 10 is a graphical diagram illustrating output signal voltage of the detector of Fig. 7, obtained empirically, so illustrating magnetic intensity distribution;

Fig. 11 is a schematic wiring diagram of a circuit for the magnetic sensor of Fig. 7, in accordance with the first embodiment of the present invention, usable also in other embodiments of the invention;

Fig. 12 is a schematic plan view of a position detector in accordance with a second embodiment of the present invention, having two permanent magnets and two straight yokes;

Fig. 13 is a schematic front view of the detector of Fig. 12;

Fig. 14 is a graphical diagram illustrating output signal voltage of the detector of Fig. 12, obtained empirically, so illustrating magnetic intensity distribution;

Fig. 15 is a schematic perspective view of a position detector in accordance with a third embodiment of the present invention, having a slidable rod for transferring a magnetic sensor;

Fig. 16 is a schematic plan view of the detector of Fig. 15;

Fig. 17 is a schematic plan view of a detector in accordance with a fourth embodiment of the present invention, having three permanent magnets or two closed magnetic circuits connected in series;

Fig. 18 is a schematic cross-sectional view of the detector of Fig. 17, taken along axis Ax in Fig. 17;

Fig. 19 is a graphical diagram illustrating output signal voltage of the detector of Fig. 17, obtained empirically, so illustrating magnetic intensity distribution;

Fig. 20 is a schematic perspective view of a position detector in accordance with a fifth embodiment of the present invention, having a pair of co-axially arranged circular yokes and a permanent magnet;

Fig. 21 is a cross-sectional view taken along line A-A of Fig. 20;

Fig. 22 is a schematic perspective view of a position detector in accordance with a sixth embodiment of the present invention, having a pair of horizontally arranged circular yokes and a permanent magnet;

Fig. 23 is a cross-sectional view taken along line A-A of Fig. 22;

Fig. 24 is a schematic perspective view of a position detector in accordance with a seventh embodiment of the present invention, having a single circular yoke;

Fig. 25 is a schematic plan view of the detector of Fig. 24, illustrating magnetic flux lines circulating through the structure of the detector;

Fig. 26 is a graphical diagram illustrating signal output voltage characteristics of the detector of Fig. 27, obtained empirically;

Fig. 27 is a schematic perspective view of a detector in accordance with an eighth embodiment of the present invention, having a permanent magnet, a cylinder yoke and a rod yoke, illustrating its co-axial structure;

Fig. 28 is a schematic cross-sectional view of the detector of Fig. 27, taken along the axis of the structure, illustrating magnetic flux and leakage flux circulating through the structure;

Fig. 29 is a schematic cross-sectional view taken perpendicularly of the axis of the structure of the detector of Fig. 27, illustrating a symmetrical distribution of leakage flux lines;

Fig. 30 is a graphical diagram illustrating output signal voltage characteristics of the detector of Fig. 27;

Fig. 31 is a schematic perspective view of a detector in accordance with a ninth embodiment of the present invention, having two permanent magnets, a cylinder yoke, and a rod yoke, illustrating its co-axial structure;

Fig. 32 is a schematic cross-sectional elevated view taken along the axis of the co-axial structure of Fig. 31, illustrating magnetic flux and leakage flux circulating therethrough;

Fig. 33 is a schematic cross-sectional view taken perpendicularly of the axis of the co-axial structure of Fig. 31, illustrating a symmetrical distribution of leakage flux;

Fig. 34 is a graphical diagram, illustrating output signal voltage characteristics of the detector of Fig 31;

Fig. 35 is a schematic perspective view illustrating the structure of the detector of Fig. 31, with a magnetic shielding member;

Fig. 36 is a schematic elevated cross-sectional view of the detector of Fig. 35, illustrating magnetic flux and leakage flux circulating through the structure of the detector;

Fig. 37 is a schematic plan view of a detector in accordance with an eleventh embodiment of the present invention, having yokes with V-shaped outside surfaces, and illustrating associated magnetic flux lines;

Fig. 38 is a graphical diagram illustrating distribution of magnetic leakage flux intensity in the longitudinal direction along the yokes of the detector of Fig. 37;

Fig. 39 is a graphical diagram illustrating output signal voltage distribution with respect to position in the longitudinal direction along the yokes of the detector of Fig. 37;

Fig. 40 is a schematic plan view of a detector in accordance with a twelfth embodiment of the present invention, having yokes with roundly concaved outside surfaces, and illustrating associated magnetic leakage flux lines;

Fig. 41 is a graphical diagram, illustrating magnetic leakage flux intensity distribution along the longitudinal direction of the detector of Fig. 40;

Fig. 42 is a graphical diagram, illustrating output signal voltage distribution with respect to position in the longitudinal direction along the yokes of the detector of Fig. 40;

Fig. 43 is a schematic plan view of a detector in accordance with a thirteenth embodiment of the present invention, having a pair of electromagnets;

Fig. 44 is a schematic plan view of a detector in accordance with a fourteenth embodiment of the present invention illustrating structure and an associated coil exciting circuit;

Fig. 45 is a graphical diagram, illustrating an output signal voltage vs. transferring position characteristic of the position detector of Fig. 44;

Fig. 46 is a magnified partial cross-sectional view of a yoke of a detector in accordance with a fifteenth embodiment of the present invention, illustrating an inside surface of the yoke having densely formed groove stripes thereon;

Fig. 47 is a schematic cross-sectional plan view of a detector in accordance with a sixteenth embodiment of the present invention, having a pair of magnetic sensing elements whose polarity axes are arranged in mutually opposite directions;

Fig. 48 is an output signal voltage vs. transferring distance characteristic diagram of the detector of Fig. 47;

Fig. 49 is a schematic cross-sectional plan view of a detector in accordance with a seventeenth embodiment of the present invention, having a magnetic sensor with twinned magnetic sensing elements positioned in parallel;

Fig. 50 is output signal voltage vs. transferring distance characteristic diagram of the detector of Fig. 49;

Fig. 51 is a schematic, partially broken, perspective view of a magnetic sensor of a detector in accordance with an eighteenth embodiment of the present invention, illustrating structure of the relevant magnetic sensor, having a magnetic enclosure;

Figs. 52 and 53 are respective schematic magnified cross-sectional plan views of the magnetic sensor of Fig. 51, illustrating configuration of the magnetic field of the magnetic sensor;

Fig. 54 is a schematic block diagram of a circuit for the sensor of Fig. 51 for enabling the relevant detector to operate as a switching means;

Fig. 55 is a magnetic characteristic diagram, illustrating magnetic flux vs. magnetic field intensity, of magnetic material used for a magnetic enclosure for a magnetic sensor in a detector in accordance with the eighteenth embodiment of the present invention;

Fig. 56 is a characteristic diagram, illustrating output signal voltage vs. transferring distance, showing a hysteresis characteristic of a magnetic sensor of a detector in accordance with an eighteenth embodiment of the present invention;

Fig. 57 is a characteristic diagram, illustrating output signal voltage vs. transferring position, showing a hysteresis characteristic provided by a magnetic sensor of a detector in accordance with an eighteenth embodiment of the present invention.

Embodiments of the present invention belonging to a first group have railroad-like yokes.

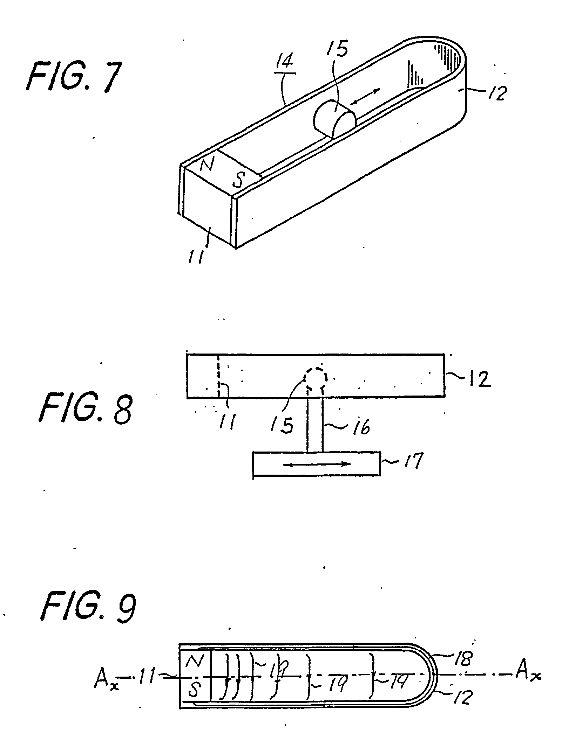

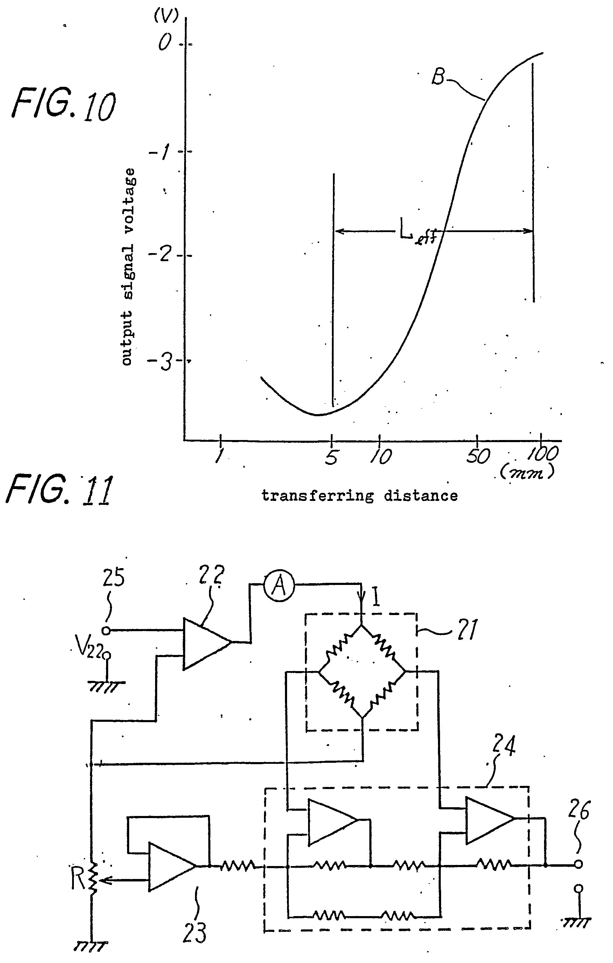

A detector in accordance with a first embodiment of the present invention, having the simplest structure of the first group, is illustrated by a schematic perspective view in Fig. 7, a schematic front view in Fig. 8, and a schematic plan view in Fig. 9. The position detector has a closed magnetic circuit 14 comprising a U-shaped yoke 12, a permanent magnet 11, and a magnetic sensor 15 having a magnetoresistive sensing element such as a barber-pole-type element. Yoke 12 is made from a ribbon-like thin magnetic plate, an iron plate of 0.4 mm thickness, for example. Yoke 12 is bent to a U-shape, the bent portion thus forming one end of the closed magnetic circuit 14. At the other end of the circuit, the N-pole face and the S-pole face of permanent magnet 11 are attached to the inner walls of yoke plate 12 tightly, forming a closed magnetic circuit 14. By means of a supporting member 16, magnetic sensor 15 is fixed to a transferring base 17 which is movable along a guide means (not shown) so that magnetic sensor 15 is movable along the inside surface of one of branches of U-shaped yoke 12. Magnetic flux lines 18 emanating from the N-pole run through yoke 12 and return to the S-pole. A part of the magnetic flux emanates as leakage flux from the two surfaces of yoke 12, in an outside (outwards) direction (flux not shown) and in an inside (inwards) direction of closed magnetic circuit 14. Hereby, only leakage flux lines 19 directed to the inside (directed inwards) of closed magnetic circuit 14 are of interest. These leakage flux lines run across the inside air space of closed magnetic circuit 14 in directions almost perpendicular to the inside surfaces of yoke 12. However, in the air space extremely close to the inside surfaces of yoke 12, the magnetic leakage flux lines tend to curve towards permanent magnet 11. Generally, magnetic sensor 15, therefore, may transfer in parallel with an inside surface of yoke except portions (in regions) extremely close to that surface. The magnetic field intensity of leakage flux 19 is highest towards permanent magnet 11 and gradually decreases along axis Ax of yoke 12 away from magnet 11. Theoretically, the distribution of intensity of the leakage flux 19 is proportional to the three-halves power of the distance from magnet 11. However, by selecting appropriately relevant constants, a slowly decreasing magnetic intensity distribution can be obtained. For example, an empirically obtained magnetic intensity distribution is illustrated by Fig. 10, wherein output signal voltage of magnetic sensor 15 in V (volts) is taken on the ordinate and distance L in mm from permanent magnet 11 on the abscissa in a logarithmic scale. The coercive force of permanent magnet 11 is 800 Oe and the output signal of the magnetic sensing element of magnetic sensor 15 is amplified 100 times. The resulting distribution is plotted in curve B of Fig. 10. The practically available measuring range, $L_{eff}$, wherein the distribution curve is almost near to linear, ranges from 5 mm to 90 mm. Disturbances due to external magnetic fields are fairly reduced to some degree, because of some shielding effect afforded by yoke 12 for magnetic field inside closed magnetic circuit 14. Thus, with the position detector of Fig. 7, fairly accurate and reliable position detecting is possible.

Fig. 11 illustrates a circuit diagram of a circuit for use with the magnetic sensor 15 of the embodiment of Fig. 7. Magnetic sensing elements are represented by an equivalent circuit 21 of a Wheatstone bridge. Input voltage $V_{22}$ to a constant current amplifier 22 is variable so as to make the current to bridge circuit 21 adjustable, and when no magnetic field is applied thereto, the initial balancing of circuit 21 is achieved by adjusting a variable resistance R and its associated amplifier 23. When magnetic field is applied to the magnetic sensing elements, the resulting imbalanced output of the bridge circuit 21 is amplified by a differential amplifier 24 by around 100 times and output from output terminals 26. This circuit also can be employed for other embodiments of the present invention.

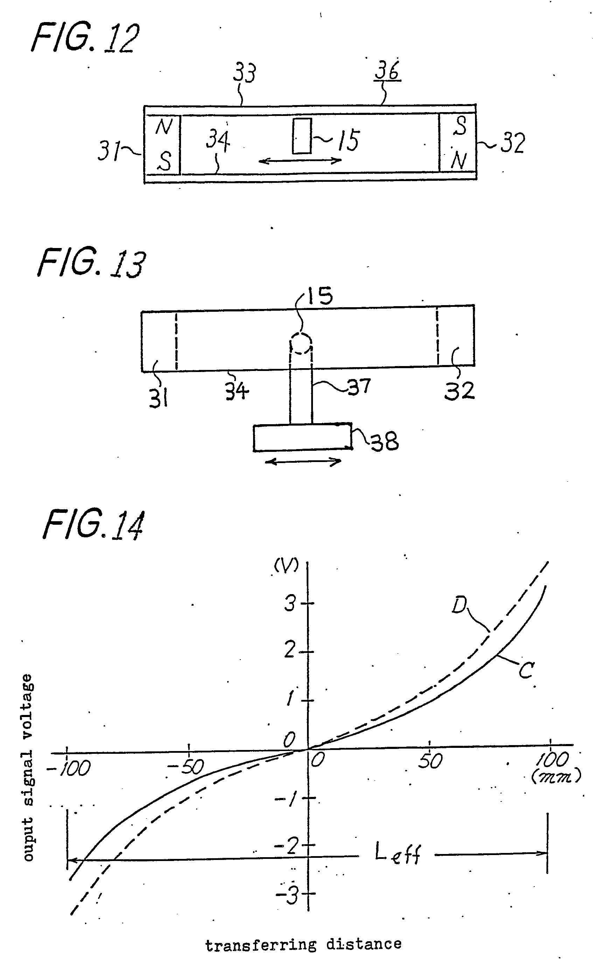

A position detector according to a second embodiment of the present invention is illustrated in a schematic plan view in Fig. 12, and a front view in Fig. 13. The detector has a closed magnetic circuit 36 composed of two yoke plates 33 and 34 and two permanent magnets 31 and 32, a magnetic sensor 15, a supporting member 37 and a transferring base 38. Yokes 33 and 34 are made of magnetic material such as iron plate of 0.4 mm thickness. As shown in Fig. 12, permanent magnets 31 and 32 are arranged between the two yoke plates 33 and 34, and the top surfaces of the poles of two permanent magnets 31 and 32 are attached tightly to the two yoke plates 33 and 34 face-to-face respectively at the two ends of the yoke plates. The directions of the pole axes of permanent magnets 31 and 32 are selected so as to be opposite to one another. Thus, a closed magnetic circuit 36 is formed wherein magnetic flux circulates, emanating from the N-pole of permanent magnet 31, running through yoke plate 33, reaching the S-pole of permanent magnet 32, then emanating again from the N-pole of permanent magnet 32 running through yoke plate 34, and returning to S-pole of permanent magnet 31. Leakage flux emanates from yoke 33 to yoke 34, and vice versa, depending on their emanating position. By the aid of a transferring means, including supporting member 37 and transferring base 38, magnetic sensor 15 is transferred along the inside surface of one of yokes, yoke 33 for example, in both directions, as indicated by a double arrow-headed line, sensing the magnetic field intensity of the leakage flux therein.

The output characteristic of the detector of Fig. 12 is illustrated in Fig. 14. The distance between the permanent magnets 31 and 32 is 260 mm. The output of magnetic sensor 15 is amplified by a constant current amplifier 100 times and the resultant is taken on the ordinate of Fig. 14 in volts. The transferring distance of magnetic sensor 15 is taken in mm, on the abscissa, whose origin corresponds to a midpoint between the two permanent magnets 31 and 32.

Solid curve C in Fig. 14 relates to empirical results obtained using permanent magnets 31 and 32 of 100O Oe, and broken-line curve D relates to a case using permanent magnets of 1600 Oe. The practically available measuring length $L_{eff}$ is fairly long as compared with previous proposals, and is $\pm 100$ mm, namely 200 mm in total. Apparently, a higher coercive force for the permanent magnets serves to provide higher output voltages, as shown by curve D.

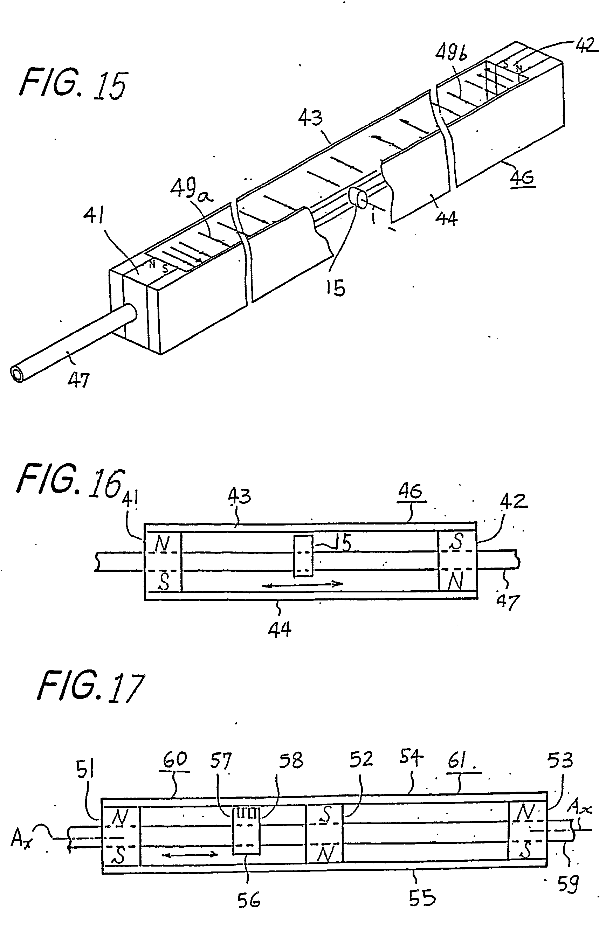

Fig. 15 is a perspective view of a detector in accordance with a third embodiment of the present invention, illustrating structure and leakage flux lines. Fig. 16 is a schematic plan view of the detector. Compared with the detector of Fig. 12, the transferring means is simplified. The position detector of Fig. 15 has a closed magnetic circuit 46 composed of permanent magnets 41 and 42, and yokes 43 and 44, and a magnetic sensor 15. Their arrangement is similar to the arrangement of the embodiment of Fig. 12. A transferring rod 47 made of non-magnetic material is arranged slidably in its axial direction in parallel with yokes 43 and 44. Magnetic sensor 15 is fixed to rod 47 and carried thereby. The rod 47 is supported slidably by holes opened in permanent magnets 41 and 42 respectively. Rotating motion of the transferring rod 47 around its axis is strictly limited so that the plane of the magnetoresistive sensing element (not shown) of magnetic sensor 15 is kept accurately in parallel with leakage flux lines 49a or 49b (Fig. 15). For this purpose, a square cross-section, for example, for the rod 47 and corresponding square holes opened in permanent magnets 41 and 42 may be employed, resulting in relatively high machining costs. However, the transferring function is stable and reliable.

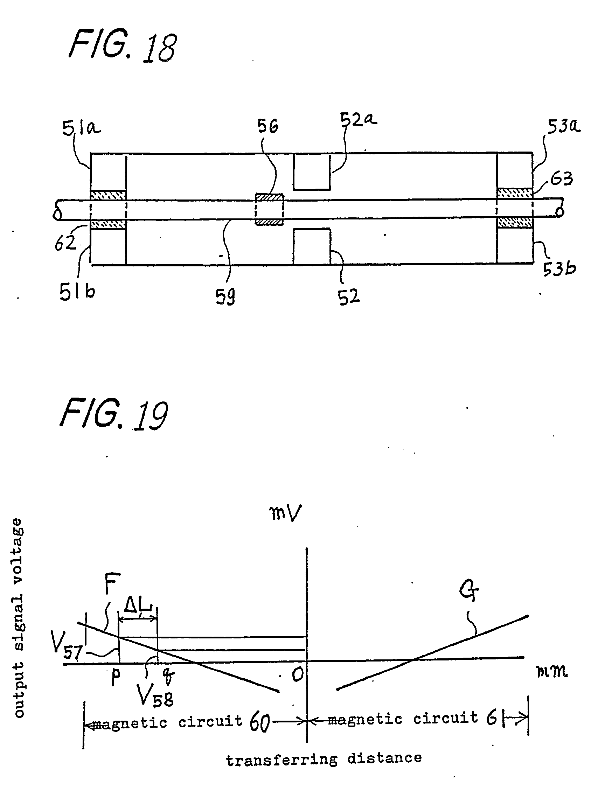

Fig. 17 and Fig. 18 are a schematic plan view and a cross-sectional front view of a detector in accordance with a fourth embodiment of the present invention. The position detector has two closed magnetic circuits 60 and 61 connected in series to each other. Magnetic sensor 56 has a pair of magnetic sensing elements 57 and 58 of magnetoresistive material arranged in parallel with each other with a small distance $\Delta L$ therebetween. Three permanent magnets 51, 52 and 53, are arranged between yokes 54 and 55 made of magnetic material such as iron plate of 0.4 mm thickness, forming the two closed magnetic circuits 60 and 61. The direction of the pole axis of each permanent magnet is set to be perpendicular to yokes 54 and 55, and to alternate from one magnet to the next. Thus the closed magnetic circuits 60 and 61 are connected in series. In practice, permanent magnet 51 is composed of two smaller permanent magnet pieces 51a and 51b separated by a non-magnetic block such as a brass block 62 (shown by hatching). A small permanent magnet 51a, brass block 62 and another small permanent magnet 51b are stacked up in the recited order and adhered to one another to form one body. In the same manner, permanent magnet 53 is formed to comprise small permanent magnets 53a and 53b, and a brass block 63 (hatched). The middle permanent magnet 52, however, has no brass block. It has an air space between two small permanent magnets 52a and 52b, to allow the passage of the transferring magnetic sensor 56. Of course, the magnetic pole axes of the two small permanent magnets comprised in each permanent magnet 51, 52 or 53, has the same direction. Transferring rod 59 made of non-magnetic material is supported by brass blocks 62 and 63 through holes opened therein, and is slidable in its axial direction. Magnetic sensor 56 is attached to transferring rod 59 to move along the inside surface of one of two yokes, sensing magnetic leakage flux intensity. A signal voltage is output from magnetic sensor 56 in the same manner as that of previously described embodiments, and an empirically obtained characteristic therefor is plotted in Fig. 19. In Fig. 19, distance (mm) along the transferring direction of magnetic sensor 56 is taken on the abscissa, whose origin is the center of permanent magnet 52, and output signal voltage (mV) is taken on the ordinate. Curve F is a characteristic curve for closed magnetic circuit 60 and curve G for closed magnetic circuit 61, those curves being symmetrical with respect to the ordinate axis. Each curve exhibits a characteristic similar to that of the detector illustrated in Fig. 13.

The two magnetic sensor elements 57 and 58 are provided for identifying in which closed magnetic circuit the magnetic sensor 56 lies.

For example, if magnetic sensor 56 is assumed to be in closed magnetic circuit 60, and magnetic sensing elements 57 and 58 are positioned at points corresponding to points p and q on the abscissa of Fig. 18, it appears that the output signal voltage $V_{57}$ of magnetic sensing element 57 is higher than that $V_{58}$ of magnetic sensing element 58. This relationship $V_{57} > V_{58}$ is maintained as long as magnetic sensor 56 is located in closed magnetic circuit 60.

However, this relationship is inverted when magnetic sensor 56 is located in closed magnetic circuit 61, becoming $V_{57} < V_{58}$.

Output signal voltages of the two magnetic sensing elements 57 and 58 are applied to a differential amplifier (not shown), whose positive or negative output voltage provides the indication of the closed magnetic circuit in which the magnetic sensor 56 is presently located. The output signal voltage of magnetic sensor 56 can be provided from one of the magnetic sensor elements 57 and 58, or from a summation of voltages from both, whereby the position indicated corresponds to a position distanced from the midpoint between the two magnetic sensor elements 57 and 58. When each closed magnetic circuit 60 and 61 is formed so as to have a characteristic as shown in Fig. 14, the total effective measuring distance $L_{eff}$ of the position detector of Fig. 17 becomes 400 mm.

Detectors in accordance with embodiments of the present invention ·of the first type, as described above, have a linearly transferring magnetic sensor, and are employable as linear position detectors. Now, position detectors having a circular transferring path for a magnetic sensor will be described. These detectors are employable as angular position detectors.

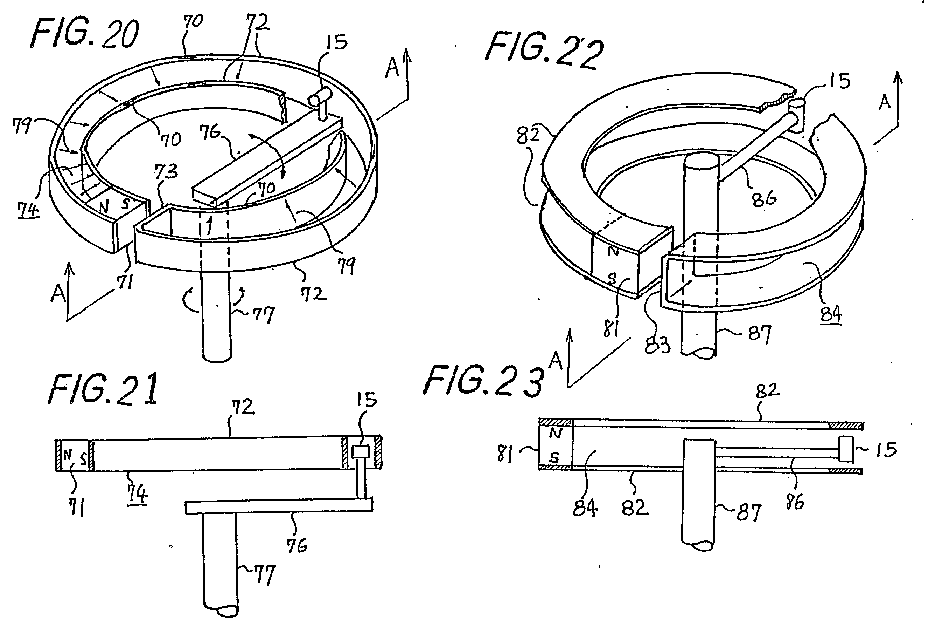

Fig. 20 is a perspective view of a detector in accordance with a fifth embodiment of the present invention, and Fig. 21 is an axial cross-sectional view taken along line A-A of Fig. 20. A closed magnetic circuit 74 is formed of a permanent magnet 71 and a U-shaped yoke 72 of magnetic material which is rounded in a circular shape and is bent back at its end 73, where magnetic flux returns back. The surfaces of the wall of the yoke 72 are perpendicular to the plane of the circle of the yoke 72. The configuration provided is something like a short, double-walled cylinder, having a small cut spacing (spacing between the walls). The end portion 73 of the yoke 72 is positioned a small distance from permanent magnet 71 which is inserted between the two branches of yoke 72 at the other end of yoke 72, as shown in Fig. 20. Magnetic flux 70 passing through yoke 72 and leakage flux 79 inside the closed magnetic circuit 74 are shown in the Figure. Magnetic leakage flux leaking outside (outwardly of) closed magnetic circuit 74 is not illustrated. A magnetic sensor 15 is supported by a support member 76 which is fixed to a rotating shaft 77 whose axis passes through the center of the circle of yoke 72, so that magnetic sensor 15 can transfer inside closed magnetic circuit 74 along an inside surface of yoke 72. Support member 76 and rotating shaft 77 are of non-magnetic material, such as brass. Leakage flux intensity at a given angular position within circular closed magnetic circuit 74, or circular yoke 72, can be sensed and a signal voltage is output, by magnetic sensor 15. It should be noted that the transferring means for magnetic sensor 15 is of remarkable simplicity. The magnetic leakage flux intensity distribution along the circular path of magnetic sensor 15 is almost the same as that illustrated in Fig. 10 and further description is omitted for simplicity.

Fig. 22 is a perspective view of a detector in accordance with a sixth embodiment of the present invention, and Fig. 23 is an axial cross-sectional view along line A-A of Fig. 22. As shown, this detector differs from that of Fig. 20 in that the surfaces of circular yokes 82 of the detector of Fig. 22 are in parallel with the plane where the circular yoke 82 lies, while those of the detector of Fig. 20 are perpendicular to that plane. Yoke 82 has an end portion.83 at which the magnetic path is bent back. In other words, circular yoke 82 resembles a pair of like washers positioned co-axially and in parallel with one another, spaced apart, each with a small sector where the two washers are connected by end portion 83. Other members in the detector of Fig. 22, a permanent magnet 81, a magnetic sensor 15, a support member 86, and a rotating shaft 87, and the functions of these members, are substantially similar to those of corresponding members in the detector of Fig. 20.

Detectors in accordance with embodiments of the present invention of the second type will be described below. As stated previously, this type has a single yoke instead of the railroad-like double yoke of the previous embodiments. This allows a more arbitrary selection of shape and the use of simpler structures than embodiments of the first type.

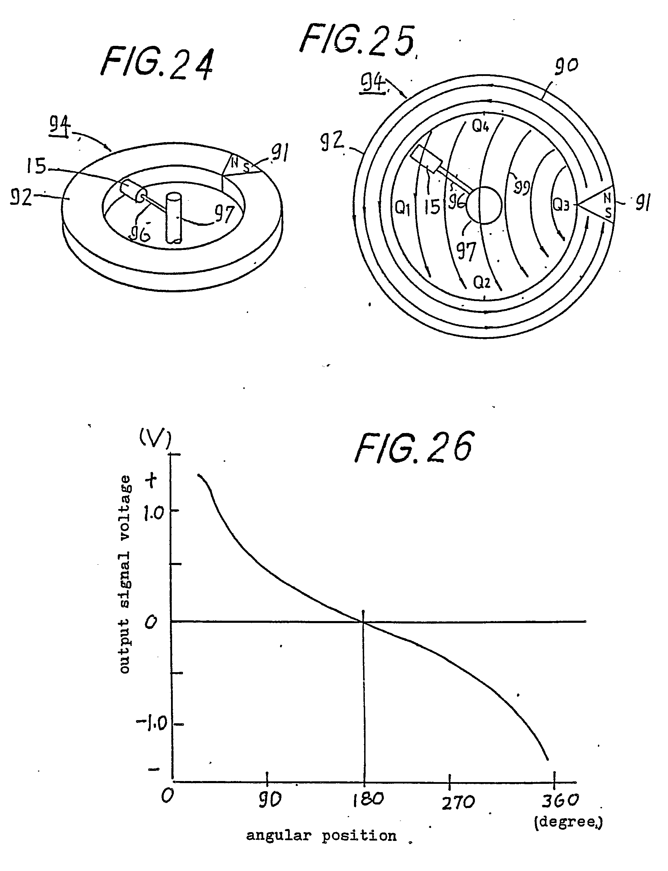

Fig. 24 is a perspective view of a detector in accordance with a seventh embodiment of the present invention. This detector, an angular position detector, has a circular closed magnetic circuit 94 composed of a circular yoke 92 made of magnetic material such as iron. In a portion of circular yoke 92, a wedge-shaped permanent magnet 91 is inserted. The tapered portion of the wedge of permanent magnet 91 is directed to the inside of the ring of yoke 92. This arrangement of wedge-shaped permanent magnet 91 serves to improve the linearity of angular characteristics of output signal voltage of the detector. The associated magnetic sensor 15, support member 96 and rotating shaft 97 are similar to those of the detectors of Figs. 20 and 22.

Fig. 25 is a schematic plan view of the detector of Fig. 24, illustrating flux 90 circulating through yoke 92, and leakage flux 99 exiting from the inside surface of the wall of yoke 92 and terminating at an opposite portion of the same. As can be seen in Fig. 25, the lengths of the paths of leakage flux lines differ depending on the position from which the leakage flux concerned emanates. Point $Q_3$ on the inside surface of circular yoke 91 is located at the center of permanent magnet 91. Point $Q_3$ is taken as origin, zero degrees, and angular position is graduated turning anti-clockwise in the Figure. $Q_4$ denotes a 90-degree point, $Q_1$ a 180-degree point and $Q_2$ a 270-degree point. By sweeping the leakage flux field inside closed magnetic circuit 94 by magnetic sensor 5, sensing the magnetic leakage flux field intensity therein, with the aid of transferring means 96 and 97, a characteristic curve illustrating the relationship between angular position and output signal voltage of magnetic sensor 5 is obtained. Fig. 26 illustrates an empirically obtained characteristic curve. A practically available effective measuring range for angular position is approximately from 60 degrees to 300 degrees. This range seems to be fairly wide considering the effect of the varying path lengths of leakage flux lines inside the closed magnetic circuit. In this case, the shape of the permanent magnet is considered to serve much to compensate for variation of leakage flux path lengths, improving linearity of measuring characteristics.

With position detectors as described above, the magnetic sensor(s) are regarded as transferrable and the closed magnetic circuit means fixed. However, it is possible to, effectively, reverse this arrangement, particularly in the case of angular position detectors. The magnetic sensor can be fixed and the magnetic circuit means (e.g. circular yoke together with permanent magnet) can rotate, depending on the required condition.

Regarding angular position detectors in accordance with the fifth to seventh embodiments, other combinations of yokes and permanent magnets, like those of the linear position detectors of the preceding embodiments (such as the second, third and fifth embodiments) can be considered. However, the basic combinations are the same and thus further detailed configurations are not shown.

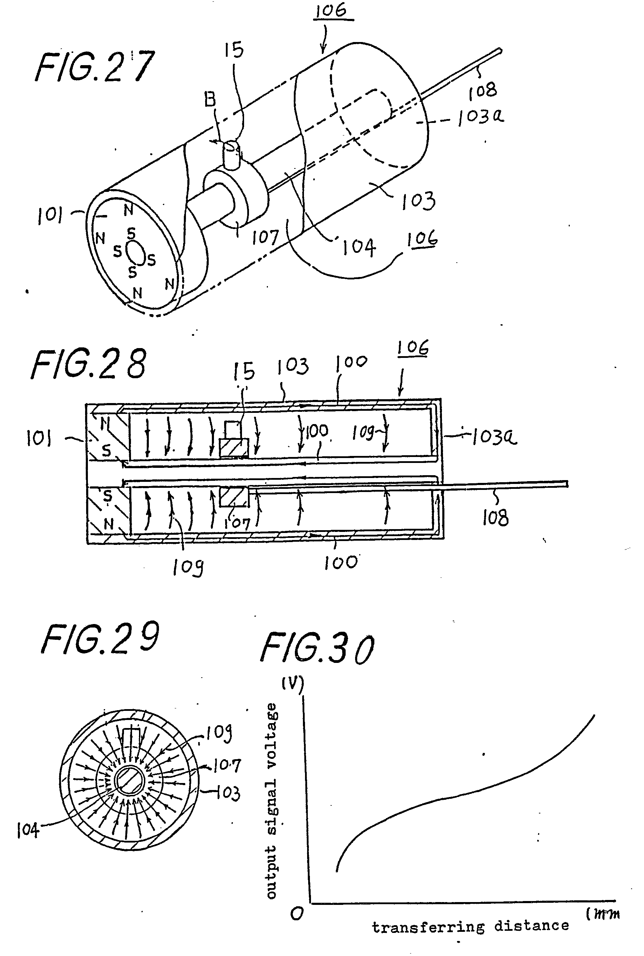

Embodiments of the third type having a structure with a co-axial configuration will now be described. Fig. 27 is a schematic perspective view of a detector in accordance with an eighth embodiment of the present invention, and Fig. 28 is an axial cross-sectional view of the detector. The position detector has a closed magnetic circuit 106 formed by a cylinder yoke 103, one end of which is closed by a lid 103a, a rod yoke 104 and a permanent magnet ring 101. These three parts are arranged coaxially and made of magnetic material such as iron. Permanent magnet ring l01 is inserted into yoke 103 and fixed tightly therewith at the opposite end of the cylinder to the lid 103a. The permanent magnet ring 101 has a hole opened co-axially therein which receives rod yoke 104. Ring l01 and yoke 104 are fixed to contact each other tightly. Thus, a closed magnetic circuit 106 is formed, and as shown in Fig. 28, flux lines 100 exiting from the N-pole (outer portion of permanent magnet ring 101), circulating through cylinder yoke 103, lid 103a, and rod yoke 104 and return to the S-pole (inner portion of permanent magnet ring 101). On the way, many leakage flux lines 109 emanate from the inner wall surface of cylinder yoke 103, travelling radially and almost perpendicularly to rod yoke 104, and return to the S-pole of permanent magnet ring l01. The field intensity of the leakage flux distribution along the axis of the cylinder 103 is the highest just near the permanent magnet ring 101 and decreases to a minimum value in the region of the lid 103a. A magnetic sensor 15 is attached to a transferring 107 made of non-magnetic material which has a co-axial hole so as to fit and be axially slidable on rod yoke 104. For driving the transferring ring 107 in the axial direction of yoke 104, a thin rod 108, for example, may be used. The thin rod 108 is inserted from the outside in parallel with rod yoke 104, passing slidably through a hole opened in lid 103a and attached to transferring ring 107. Thus magnetic sensor 15 can be transferred axially along the inside surface of cylinder yoke 103 by being pushed or pulled by rod 108 which is closely connected to a body (not shown), the position of which is to be detected. The mechanism employed may have various structures as appropriate for driving magnetic sensor 15.

Fig. 29 is a schematic cross-sectional plan view of the detector of Figs. 27 and 28, illustrating leakage flux lines running radially inwardly, which lines are quite symmetrical with respect to the center of the sector. As the result, magnetic sensor 15 carrying a magnetoresistive sensing element such as barber-pole-type element is allowed to rotate around the rod yoke, with no effect on output signal voltage, thus favouring easy machining and assembling of the position detector. This is an outstanding advantage of a position detector of the co-axial type. In addition, the inside of closed magnetic circuit 106 is completely shielded from external magnetic disturbance, assuring stable measurement of distance. A relationship between an output signal voltage and transferring distance for the magnetic sensor 15 of the detector of Fig. 27 is shown in Fig. 30. This relationship is similar to that provided by a detector in accordance with the first embodiment, as shown in Fig. 10.

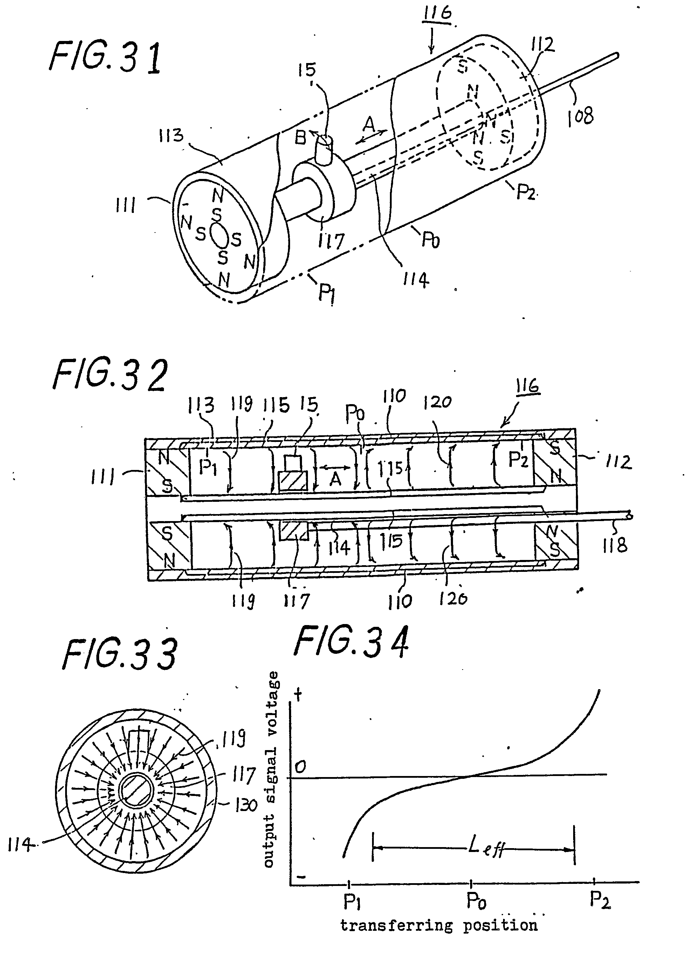

Fig. 31 is a perspective view of a detector in accordance with a ninth embodiment of the present invention, having a co-axial structure and a pair of permanent magnet rings, and Fig. 32 is an axial cross-sectional view of the detector. The position detector has a closed magnetic circuit 116 formed by a cylinder yoke 113, a rod yoke 114 and a pair of permanent magnet rings 111 and 112. The yokes 113 and 114, are arranged coaxially and made of magnetic material such as iron. Permanent magnet rings 111 and 112 are each inserted between yoke 113 and yoke 114 and fixed tightly. Permanent magnet rings 111 and 112 have co-axial holes therein into which rod yoke 114 is inserted and fixed, contacting the rings tightly. Both magnet rings 111 and 112 are magnetized in radial directions, but their directions of magnetization are opposite, as shown in Fig. 32. Thus a closed magnetic circuit 116 is formed, and as shown in Fig. 32, with flux lines 110 exiting from the N-pole (outer portion of permanent magnet ring 111), circulating through cylinder yoke 113, and returning to the S-pole (outer portion of permanent magnet ring 112). Then, magnetic flux lines 115 emanating from the N-pole of permanent magnet ring 112 (inner portion of the magnet) run through rod yoke 114 and return to the S-pole of permanent magnet ring 111 (inner portion of the magnet). Leakage flux lines 119 emanate from the inner wall surface of cylinder yoke 113, travelling radially and almost perpendicularly to rod yoke 114, returning to the S-pole of permanent magnet ring 111. Magnetic leakage flux lines 120 also travel oppositely as shown in Fig. 32.

This opposition of the directions of leakage flux lines 119 and 120 depends on the directions of radial magnetization of permanent magnet rings 111 and 112. A similar situation arose in the detector shown in Fig. 16. Field intensity of leakage flux along the axis of the cylinder is sensed by magnetic sensor 15 which is attached to a transferring ring 117 made of non-magnetic material. The ring 117 has a co-axial hole so as to fit and be axially slidable on rod yoke 114. Means for driving the transferring ring 117 in the axial direction may be a thin rod 118, for example, similar to that employed in the detector of Fig. 27. Thus, magnetic sensor 15 is transferred along the inside surface of cylinder yoke 113 to sense leakage flux 119 and 120. The advantages of the symmetry of magnetic leakage flux distribution and the magnetic shielding of the interior of the magnetic circuit are the same as those formed with the detector of Fig. 27.

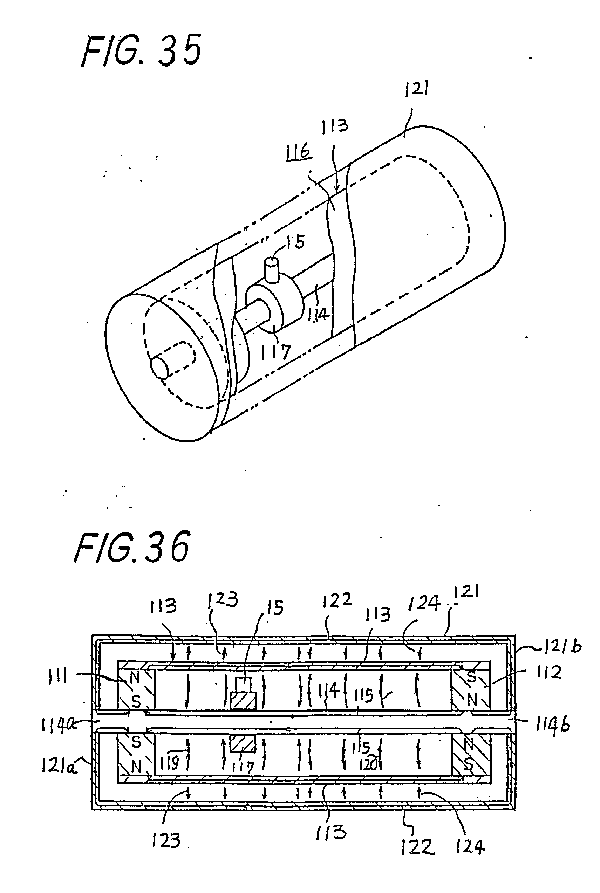

Output signal voltage of the magnetic sensor 15 is plotted against position of magnetic sensor 15 in the graph of Fig. 34. The characteristic curve of Fig. 34 is quite similar to that of Fig. 14, relating to a detector in accordance with the second embodiment. The positions $P_0$, $P_1$ and $P_2$, indicated in Fig. 31 correspond to the points indicated on the abscissa in Fig. 34 designated by like reference signs. In the curve of Fig. 34 signal voltage has opposite polarities at opposite ends of the curve and is zero at a middle point (between the two permanent magnet rings 111 and 112), namely at point $P_0$ in the Figure. The practically available measuring range $L_{eff}$ is designated in Fig. 34. This length amounts to approximately 200 mm in practice.

A detector in accordance with a tenth embodiment of the present invention is illustrated in the perspective view of Fig. 35 and in the cross-sectional elevated view of Fig. 36. This position detector is of co-axial type, corresponding to that of Fig. 31 but having magnetic shielding means. In the detector of Fig. 35, rod yoke 114 extends, in both directions, beyond the two permanent magnet rings 111 and 112, forming projecting portions 114a and 114b respectively (Fig. 36). A shielding cylinder 121, being made of magnetic material, has lids 121a and 121b at its opposite ends each with a hole at its center. Shielding cylinder 121 is fitted to projected portions 114a and 114b by inserting them into the holes in lids 121a and 121b respectively. Magnetic flux lines 122 run through shielding cylinder 121 and leakage flux lines 123 and 124 run across the space between shielding cylinder 121 and cylinder yoke 113. The whole position detector is protected from external magnetic disturbance by the shielding effect provided by shielding cylinder 121, affording enhanced stability and accuracy of measurement. A cylindrical shielding means is described in Fig. 35 but the external shape of the shielding means is not limited to that of a cylinder. Any other shape, a square shape for example, may be used, as long as the shielding means magnetically encloses the position detector.

Various features which can be incorporated into position detectors embodying the present invention will now be described in relation to following embodiments. These features are concerned, for example, with improving linearity of output signal voltage vs. transferring distance characteristics, usage of electro-magnets instead of permanent magnets, enhancement of emanation of leakage flux from the inside surface of a yoke by means of a specially formed inside surface, means avoiding effects of temperature drift of a magnetic sensor, and a magnetic sensor having a hysteresis character. These features are applicable detectors in accordance with the embodiments of the present invention already described.

Generally, when magnetic flux passes through a path of magnetic material, leakage flux emanates from the surface of the magnetic path, and the leakage flux decreases with the permeance of the magnetic path. Utilizing this phenomenon, the cross-sectional area of yoke members, perpendicular to their longitudinal direction, may be varied over the longitudinal extent of the yoke member so that leakage flux lines are provided with a linear intensity distribution in the same direction.

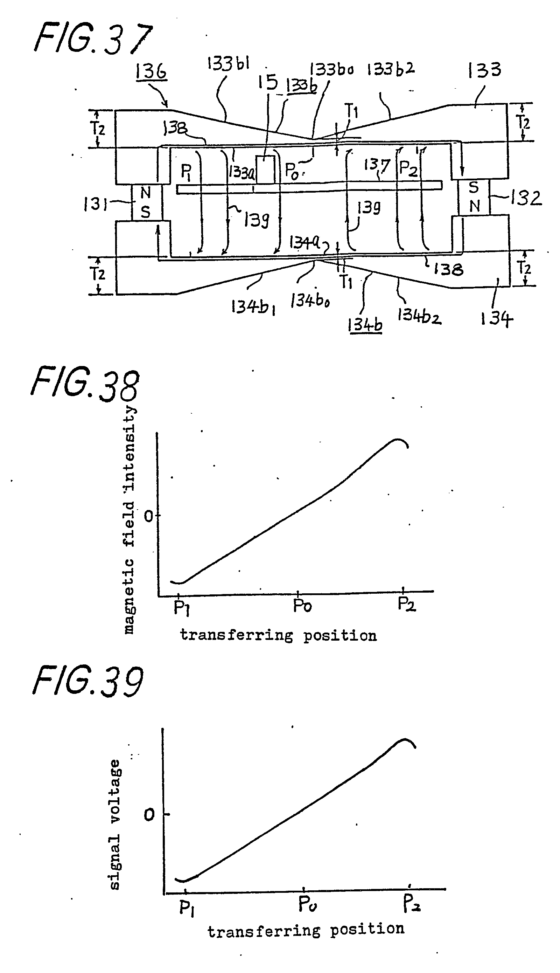

Fig. 37 is a schematic plan view of a detector in accordance with an eleventh embodiment of the present invention, illustrating its configuration and associated magnetic flux lines. The position detector has a closed magnetic circuit 136 formed of two permanent magnets 131 and 132 and two yokes 133 and 134, and a magnetic sensor 15 carried by transferring means 137 as used in the detector of Fig. 12. The inside surfaces 133a and 134a of yokes 133 and 134 are flat planes facing and parallel to each other. The surfaces of the yokes opposite to their respective inside surfaces 133a and 134a, namely, outside surfaces 133b and 134b of the yokes, have a concaved form, each outside surface being formed by two joined inclined flat surfaces $133b_1$ and $133b_2$, or $134_1$ and $134_2$ descending towards a center portion $133b_0$ or $134b_0$ as shown in Fig. 37. The outside surfaces 133b and 134b have their "lowest points" $133b_0$ and $134b_0$ at their center positions $P_0$ and have their "highest points" at their ends $P_1$ and $P_2$. The thickness of a yoke is a minimum, $T_1$, at its center $P_0$ and a maximum, $T_2$, at its ends $P_1$ and $P_2$. The ratio $T_2/T_1$ is selected to be in the range from 2.0 to 5.0. The magnetic flux emanating from permanent magnets 131 and 132 circulates through closed magnetic circuit 136 in the same manner as in the detector of Fig. 12. The width of the two yokes 133 and 134 is constant. Thus the magnetic permeance of yokes 133 and 134 in their longitudinal directions decreases gradually from their ends towards their center portions. Therefore, magnetic leakage flux lines 139 emanating from the inside surfaces 133a and 134a are gradually enhanced from the ends $P_1$ and $P_2$ towards the center portion $P_0$. More leakage flux lines are produced towards center portion $P_0$ than would be the case if the outside surfaces 133b and 134b were straight as in the detector of Fig. 12. As a result, the position detector of Fig. 37 embodiment is provided with a more linear distribution of magnetic leakage flux intensity than that of Fig.

12, as shown in Fig. 38, leading to a more linear output signal voltage vs. transferring distance characteristic, as shown in Fig. 39 (compare Fig. 14).

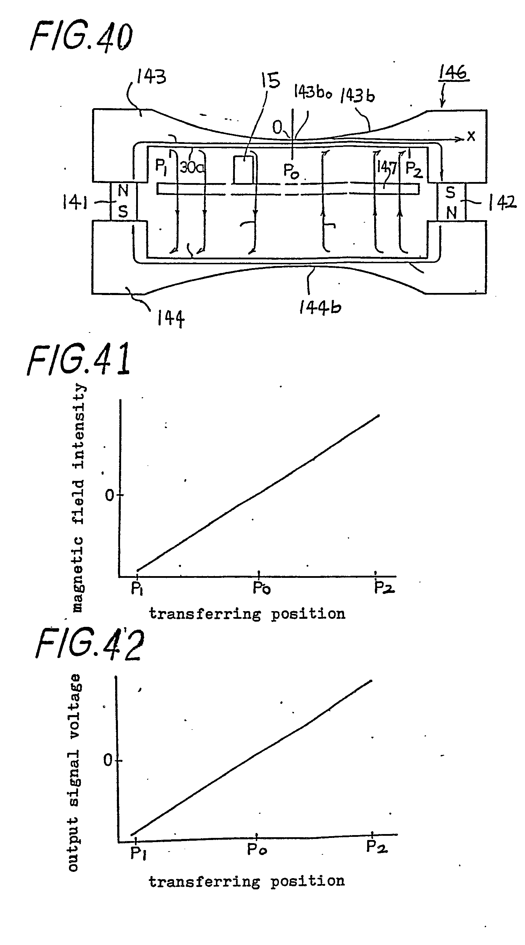

Fig. 40 is a schematic plan view of a detector in accordance with a twelfth embodiment of the present invention, having a configuration similar to that of the detector of Fig. 37 except for the shapes of the concaved outside surfaces of the yokes. Description of the parts of the detector of Fig. 40 is omitted for the sake of simplicity. Inside surface 143a and 143b of respective yokes 143 and 144 are flat and extend in parallel with each other. The concaved outside surface 143b (and 144b) can be represented logically by a formula,

$$Y \pm constant\ X^{3/2},$$

whereby x and y are co-ordinates with the origin taken at the center $P_0$ of the outside surface 143b (144b), x is the length measured along the longitudinal direction of yoke 143 (144), and y is the thickness of yoke 143 (144) measured perpendicularly to the longitudinal direction. The leakage flux density distribution, and output signal voltage vs. transferring distance characteristic curves of the magnetic sensor of the detector of Fig. 40 are shown respectively in Fig. 41 and Fig. 42, having greater linearity than those of the detector of Fig. 37.

Hereto, a permanent magnet has been employed as a magnetic field generating means. However, an electromagnet is also applicable to a position detector embodying the present invention. There are two advantages for the use of an electromagnet instead of permanent magnets; one is that external magnetic hazards can be easily escaped, and the other is that a wider freedom of design, particularly for the relevant transferring means, is afforded.

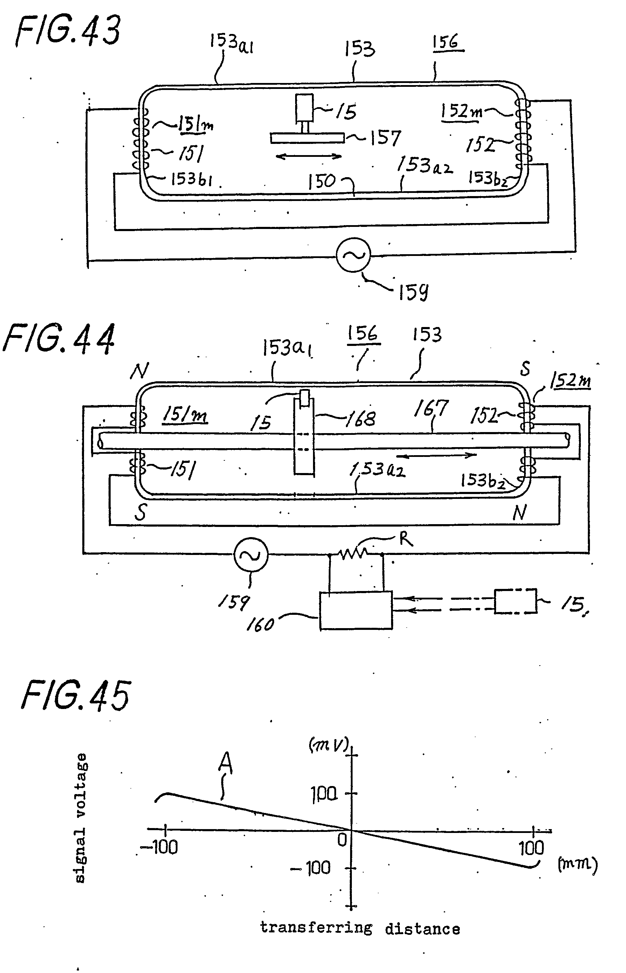

Fig. 43 is a schematic plan view of a detector in accordance with a thirteenth embodiment of the present invention, having a closed magnetic circuit 156 comprising a long rectangular ring yoke 153 with two long sides $153_{a1}$ and $153_{a2}$ which are parallel. Two exciting coils a 151 and 152 are connected in series and wound around two short sides $153_{b1}$ and $153_{b2}$ of yoke 153 made of magnetic material, with opposed winding directions. As a result, electro-magnets 151m and 152m have opposite magnetizing directions. An alternating power supply 159 having a predetermined frequency is provided to supply the electromagnets 151m and 152m with alternating exciting current, causing alternating magnetic flux 150 to circulate through yoke 153. Alternating magnetic leakage flux (not shown) emanates from the inside surface of yoke 153, which flux is sensed by a magnetic sensor 15 transferring along the inside surface with the aid of transferring means 157. Operation is generally similar to that of the detector of Fig. 12.

Fig. 44 is a plan view of a detector in accordance with a fourteenth embodiment of the present invention. A rectangular yoke ring 153 is made from an iron plate. The width direction of the yoke is perpendicular to the plane of the Figure. Transferring means comprise a rod 167 and a support 168 of non-magnetic material, slidable in the longitudinal direction of yoke ring 153, being supported through holes opened in yoke ring 153. A magnetic sensor 15 is attached to slidable rod 167 through a support 168, and can be transferred in two directions as indicated by a double-arrow-headed line. An end of the slidable rod is closely contacted with a body whose position is to be detected and moves together with that body, and thus the position of the body of interest is detected. The output signal voltage of magnetic sensor 15 (indicated in this connection by a chain-line box) is read out through a lock-in amplifier 160 to which is supplied the voltage drop through a resistor R connected in series with coils 151 and 152. Only those components of the output signal voltage of magnetic sensor 15 having the same frequency, such as 12 KHz, as that of the power supply 159 are output as position information. Thus, external magnetic noise except noise having the same frequency as that of alternating power supply 159 is filtered out. Fig. 45 illustrates a signal voltage vs. transferring distance characteristic of a position detector as in Fig. 44, having ±100 mm measuring range.

The machinability of yoke ring 153 is much higher than that of a conventional permanent magnet, and the design of electromagnets can also be selected with more freedom than is available for position detectors using permanent magnets. Consequently, the design of a position detector having electromagnets, particularly the design of the transferring means of the magnetic sensor, becomes much more freely selectable than that of a position detector having permanent magnets.

In addition, when a position detector using electromagnets is used in a high temperature environment (such as in the engine compartment of a motor car), the position detector is stable without any compensating means. In such a case, a position detector using permanent magnets is not stable, and requires some compensation.

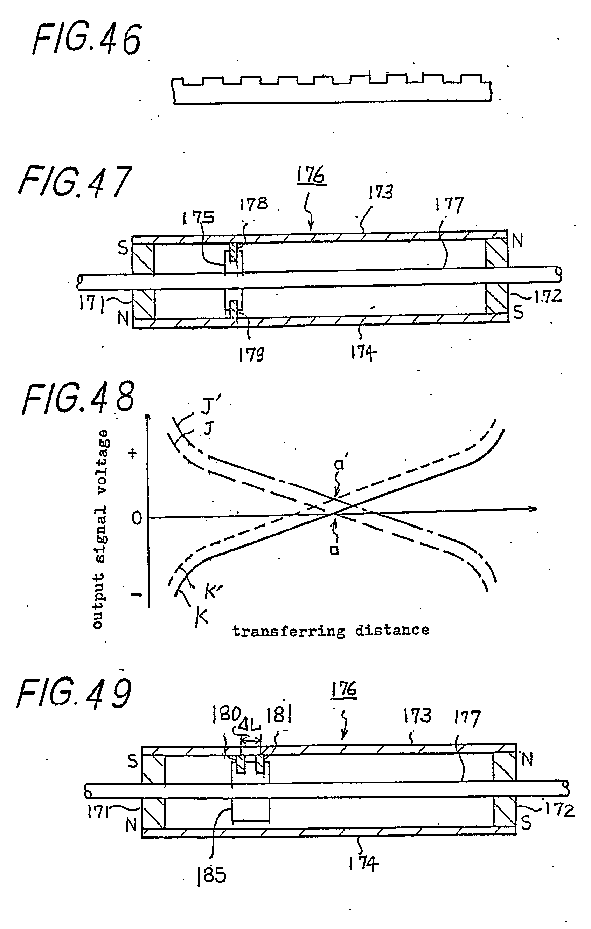

In general, more leakage flux tends to emanate from a projection having a sharp pointed summit formed on a surface of a magnetic material member than does from a flat surface. Utilizing this phenomena, the employment of a grooved surface for the inside surface of a yoke is proposed for a detector in accordance with a fifteenth embodiment of the present invention. This enhances leakage flux from the inside surface of the yoke, serving to reduce magnetomotive force required to obtain a sufficient output signal voltage from a magnetic sensor of the position detector. For example, a yoke having an inside surface with a great number of striped projections thereon with height of 5 μm, width of 20 μm, and pitch of 40 μm, as shown in a magnified partial cross-sectional view in Fig. 46, is found effective to enhance leakage flux density. Of course, other shapes of projection, such as saw-shaped stripes, notched grains, etc., are applicable. These projections can be formed by a mechanical method, a physical or chemical depositing method, a powder sintering method, etc.

Compensation for drift of a relevant magnetic sensor of a position detector, caused by external conditions such as external disturbances and environmental temperature is also considered.

In linear position detectors, such as those of Figs. 12 and 15, where two permanent magnets are employed and having a characteristic including a minus signal voltage and a plus voltage (as shown in Fig. 14) there is a point of zero signal voltage (hereafter a zero point) which is an important point often utilized as a standard point for detecting an absolute position of a body of interest.

In an amplifier, there occurs sometimes an offset caused generally by changes in bias resistors, transistor characteristics, etc., leading to the drift of the zero point of the position detector. This results in erroneous position detection.

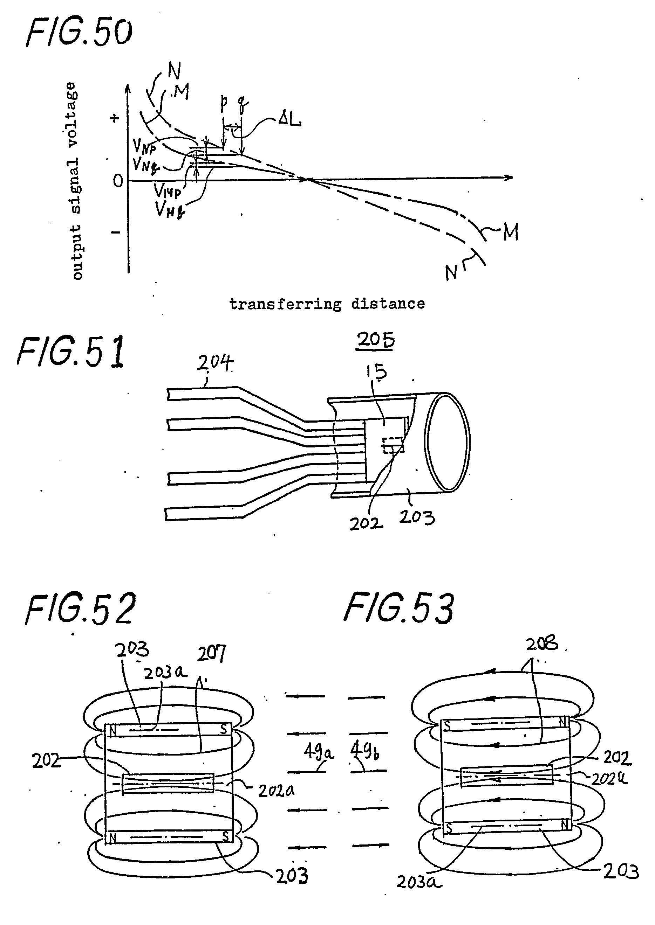

Fig. 47 is a cross-section plan view of a detector in accordance with a sixteenth embodiment of the present invention, having a closed magnetic circuit 176 composed of a pair of permanent magnets 171 and 172, and two yokes 173 and 174 arranged in the same manner as in detector of Fig. 15. A rod 177 of non-magnetic material is slidably supported through holes opened in the permanent magnets 171 and 172. A magnetic sensor 175 is attached to rod 177, and has two magnetic sensing elements 178 and 179, having sensing polarities as for barber-pole-type magneto-resistive elements. As magnetic sensor 175 is transferred in the longitudinal direction of yokes 173 and 174, magnetic sensing elements 178 and 179 are also transferred along the inside surfaces of yokes 173 and 174, sensing magnetic leakage flux there. The magnetic sensing elements 178 and 179 are equipped so that the directions of the sensing polarities thereof are opposite to each other. Consequently, the polarities of output signal voltages of the two magnetic sensing elements 178 and 179 are also reversed with respect one to the other.

Fig. 48 shows an output signal voltage vs. transferring distance characteristic of the position detector. The final output signal is the difference between the outputs of individual magnetic sensing elements 178 and 179 which are shown by a descending curve J and ascending curve K crossing each other at zero point a. When the position detector is subject to an external offset, curves J and K both shift upwards by the same signal voltage value, as indicated by curves J' and K', providing another crossing point a'. The curves shift in the same manner and extent locating at the same position. As a result, the final output signal voltage of the position detector, the difference between the output signal voltages represented by curves J' and K' respectively, remains unchanged. In particular, the position of the crossing point, a and a', namely the zero point, is fixed at the same position as before.

When environmental temperature is raised, the saturated magnetic flux density of permanent magnets tends to decrease, resulting in a weakening of magnetic leakage flux intensity, and in a position detector causing the reduction of the output signal voltage of a magnetic sensor. Consequently, the sensitivity of the position detector, which is proportional to the slope of the characteristic curve, is decreased. In a detector in accordance with a seventeenth embodiment of the present invention, as shown in a schematic cross-sectional view of Fig. 49, this decrease in sensitivity is compensated.

A magnetic sensor 185 of the position detector of Fig. 49 has a pair of magnetic sensing elements 180 and 181 arranged in parallel to each other with a spacing distance $\triangle L$. Other structures, apart from the magnetic sensor 185, are the same as those of the detector of Fig. 47. The twinned magnetic sensing elements 180 and 181 are equipped for detecting the slope of the characteristic curve described above for cases with and without the external disturbance such as a temperature rise. Then, an output signal voltage affected by an external disturbance is corrected to the value which it would have unaffected by external disturbance, by employing a microprocessor (not shown).

Fig. 50 illustrates characteristics of detector of Fig. 49 for illustrating the principle on which correction as mentioned above is based. Therein, curve N represents a characteristic at a normal environmental temperature, and curve M a characteristic at an elevated temperature. Assuming magnetic sensing elements 180 and 181 are located at points p and q of the transferring path, spaced by a distance $\triangle L$, and the output signal voltages from magnetic sensing element 180 and 181 are $V_{Np}$ and $V_{Nq}$, the slope of curve N is derived as $V_{Np} - V_{Nq}/ \triangle L$. In the same manner, the slope of curve M is $(V_{Mp} - V_{Mq})/\triangle L$. The values $V_M$ of output signal voltage of curve M, namely, the output signal voltages from magnetic sensor 185 at an elevated temperature are corrected to those relating to normal temperature by multiplying the values with $\propto$, whereby

$$\propto = (V_{Np} - V_{Nq})/(V_{Mp} - V_{Mq}).$$

This correcting action is calculated by a microprocessor (not shown).

With the detector of Fig. 49, the zero point of the position detector is easily detected. The magnetic sensing elements 180 and 181 are spaced from each other, so output signal voltages therefrom are always different from each other except when the zero point is midway between the two magnetic sensing elements. The differential output signal voltage from magnetic sensing elements 180 and 181 is checked, through a differential amplifier for example, and a zero value indicates that the zero point is located at the midpoint between the two magnetic sensing elements 180 and 181.

A position detector combining the features of the detectors of Figs. 47 and 49 can, it will be readily understood, be realized.

There can further be provided, in connection with a position detector embodying the present invention, a magnetic sensor which exhibits hysteresis characteristics.

One example of a situation in which there is a need for such a magnetic sensor will be described briefly, for better understanding.

Assume that a position detector is used for sensing or detecting the liquid surface level in a tank, for instance a fuel or oil tank installed in a motor car. A linear position detector such as the detector shown in Fig. 15 may be used in connection with a float floating on the liquid surface. In a case where the level is continually disturbed by an external mechanical influence such as vibration, or pumping action, the float, and at the same time the position detector, is constantly moving up and down, frequently and suddenly changing its direction of movement. A pump attached to the tank for adjusting liquid level to a predetermined height may be controlled by the output signal from the position detector. The pump may be so frequently switched on and off as to shorten the life of the pump and associated devices.

To overcome this "chattering" problem, a position detector which is sensitive in one transferring direction (in one direction of movement) of its magnetic sensor, and is conservative in the opposite direction (with regard to the opposite direction of movement of the sensor) is provided in accordance with an eighteenth embodiment of the present invention. Such a position detector has a magnetic sensor which exhibits hysteresis characteristics.

Fig. 51 is a schematic perspective view of a magnetic sensor 205 employed in a position detector in accordance with the eighteenth embodiment of the present invention. Part of the sensor is broken away, for clarity. Apart from the magnetic sensor 205, employed instead of a magnetic sensor 15 alone, the position detector of which the sensor of Fig. 51 is part may be the same as that of Fig. 15, for example. Of course, position detectors in accordance with other embodiments of the present invention can be provided with sensors having a hysteresis characteristic.

As indicated in Fig. 51, the magnetic sensor 205 contains magnetic sensing element or elements 202 (shown by dotted lines), made of magnetoresistive film. An element 202 has an output signal voltage vs. external magnetic field characteristic with a quite good linearity as shown in Fig. 6. A magnetic enclosure 203, for example a cylinder, of ferromagnetic metal, such as Permalloy, silicon steel, or resin having a magnetizing property, etc., is provided to enclose magnetic sensing element 202, almost shielding the elements magnetically. The parts of magnetic sensor 205 are arranged so that the axis of magnetic enclosure 203 coincides with the magnetizing direction of element 202. Further, the easy axis of magnetization of magnetic enclosure 203 is also selected to coincide with the axis thereof by associated heat treatment. The magnetic sensor 205 has lead terminals 204 for transmitting output signal voltage from element 202 to a subsequent amplifier.

When an external magnetic field, hereby leakage flux 49a or 49b as indicated in Fig. 15, is applied to magnetic sensor 205, magnetic enclosure 203 is magnetized first, newly emanating leakage flux 207 or 208 which is applied to magnetic sensing element 202. The magnetic field configuration is illustrated in the schematic plan views of Fig. 52 and Fig. 53. Thus, magnetic field intensity given by leakage flux 207 is applied to magnetic sensing element 202 when magnetic sensor 205 is located in the left portion of closed magnetic field 46 of the position detector of Fig. 15, and magnetic field intensity given by leakage flux 208 when magnetic sensor 205 is located in the right portion.

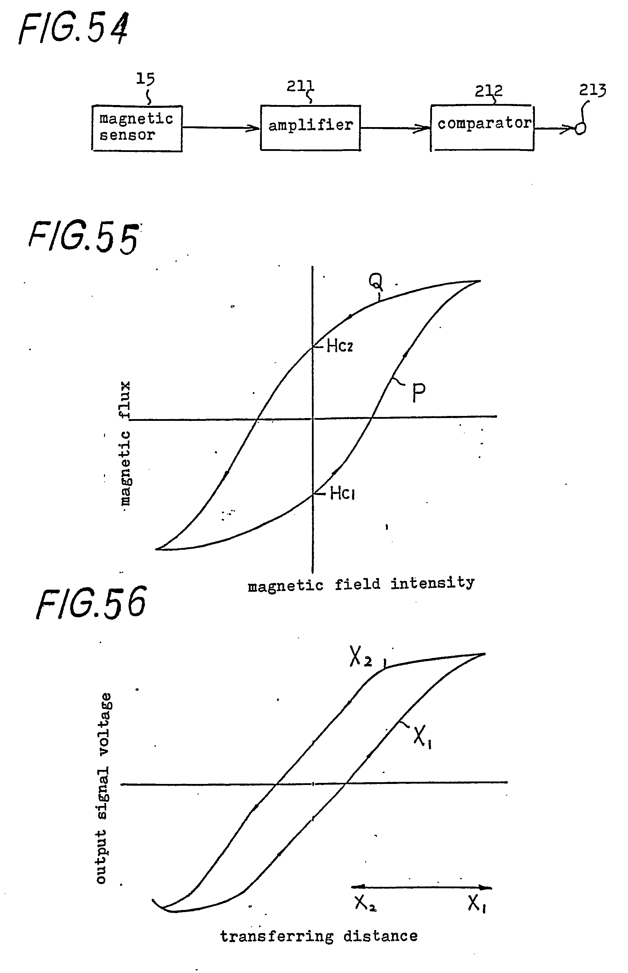

Fig. 54 is a block diagram of a circuit for employment in a position detector in accordance with the eighteenth embodiment. The output signal voltage from the position detector (magnetic sensor) is amplified by an amplifier 211 and the output voltage is compared with a predetermined reference voltage $V_r$ through a comparator 212 and used as a switch for signals for example for the pumping system of a liquid pump.

Highly magnetic metal used for magnetic enclosure 203 has a magnetic characteristic as shown by curves P and Q of Fig. 55, having a typical hysteresis characteristic. Owing to this hysteresis characteristic, the magnetic coercive force or magnetic flux density of magnetic enclosure 203 differs markedly depending on whether the applied magnetic field intensity of leakage flux 49a or 49b is increasing or decreasing with time. Referring to Fig. 55, when a magnetic field intensity of negative polarity is increased to zero, for example the coercive force becomes $H_{c1}$. In contrast, for a positive magnetic field intensity decreased to zero, the coercive force becomes $H_{c2}$. This is the case for other values of the externally applied field intensity. Therefore, magnetic field intensity applied to magnetic sensor 205 differs depending on whether the applied magnetic field intensity is decreasing or increasing with time. Here, the applied magnetic field intensity is the external field intensity given by leakage flux 49. This provides magnetic sensor 205 with a hysteresis characteristic. Consequently, the output signal voltage characteristic of the position detector also has a hysteresis characteristic as illustrated in Fig. 56, wherein the transferring position of magnetic sensor 205 is taken on the abscissa and output signal voltage of the position detector, amplified by amplifier 211, is taken on the ordinate. The transferring directions of the magnetic sensor 205 are designated by a double-arrow-headed line, indicating directions $X_1$ (rightward) and $X_2$ (leftward). The characteristic curves $X_1$ and $X_2$ correspond to the directions $X_1$ and $X_2$ respectively.

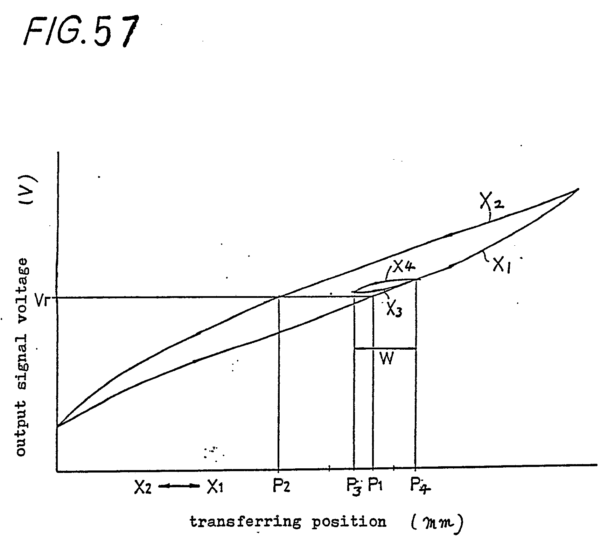

Fig. 57 is a diagram relating to one example of a position detector in accordance with the eighteenth embodiment of the present invention. The diagram illustrates the relationship between transferring position of magnetic sensor 205 and output signal voltage derived therefrom. A reference

voltage Vr is set in comparator 212, corresponding to transferring position $P_1$ of Fig. 57. When magnetic sensor 205 is transferred in the $X_1$ direction (starting from left side of the Figure), the output signal voltage of magnetic sensor 205 follows curve $X_1$. When magnetic sensor 205 reaches position $P_1$, the output signal voltage reaches a value equal to Vr. Consequently, a signal, a switching-off signal for a pump, for example, will be issued from comparator 212 through its output terminal 213. On the other hand, when magnetic sensor 205 moves in the reverse direction, the $X_2$ direction, output signal voltage from magnetic sensor 205 will follow curve $X_2$. The output signal voltage does not decrease to Vr until magnetic sensor 205 has passed position $P_1$ and reaches position $P_2$. At this point, comparator 212 will output another signal, a switching-on signal for example. Thus, there occurs a discrepancy between positions of magnetic sensor 205 at which signals corresponding to the same predetermined reference signal voltage Vr are output. As described above, this is useful in some cases, for example when the position detector is used in an oil level sensor in an oil tank of a motor car, floating on the surface of oil in combination with a float as indicated above. Assuming that oil level is at a specified position corresponding to position $P_1$ of magnetic sensor 205 and is caused, by external vibration to go up and down frequently within a range width W, corresponding to magnetic sensor positions between $P_3$ and $P_4$, the output signal voltage of magnetic sensor 205 will follow a looped curve composed of curve $X_3$ and $X_4$ shown in the Figure. Although $P_1$ lies between $P_3$ and $P_4$ the output signal voltage of magnetic sensor 205 is always maintained above reference voltage Vr, so no signal, no switching-on signal for example, is output from comparator 213. Without the hysteresis characteristic, namely, were the output signal voltage characteristic represented by a single curve such as that of Fig. 14, every time magnetic sensor 205 passes the position $P_1$, in both $X_1$ and $X_2$ directions, comparator 213 would issue a switching signal, inducing the chattering problem.

An embodiment of the present invention provides a position detector having a magnetic sensor for measuring linear or angular displacement, for detecting position of a body (without contact thereto). The detector has a closed magnetic circuit comprising magnets (permanent or electro-) and yokes. Magnetic leakage flux from inside surfaces of the yokes is utilized for position detecting. The magnetic sensor is transferred along such an inside surface by a transferring means, sensing magnetic field intensity of leakage flux distributed along the surface. This enables the detector to have a longer measuring range than that of a previously proposed detector obtained. An output signal provided is stable due to some shielding effect of the yokes. The closed magnetic circuit may have a wide variety of forms, both magnetically and mechanically. As the magnet, a permanent magnet or an electromagnet can be used. Features for enhancing linearity of output signal voltage with respect to transferring distance, for compensating offset drift of a relevant amplifier, or changes of coercive force of relevant permanent magnets can be provided.

An embodiment of the present invention can provide position-detecting apparatus comprising:

a closed magnetic circuit including

a magnetic field generating means (s) for emanating magnetic field,

a yoke member (s) made of magnetic material, said magnetic field generating means and said yoke member being connected to each other to form said closed magnetic circuit;

a magnetic sensing means capable of sensing magnetic field for outputting a signal voltage; and

a transferring means carrying said magnetic sensing means so that said magnetic sensing means is transferred along the inside surface of said yoke member,

said magnetic sensing means sensing magnetic field intensity of magnetic leakage flux which is emanated from inside surface of said yoke member and has a non-uniform magnetic field intensity distribution, thus the position at where said magnetic sensing means is located is detected by said outputted signal voltage from said magnetic sensing means.

The magnetic sensing means may be a magnetic sensor having a magnetoresistive sensing element, which element may be of barber-pole type.

The magnetic field generating means (s) may be a permanent magnet.

The yoke member may be composed of two yoke plates which are arranged in parallel with each other and keeping a distance therebetween, and extending along a path of a predetermined shape, which path may be a straight line or a circle line.

The yoke member may be U-shaped having a pair of straight branches facing in parallel with each other and said magnet is inserted between said branches and connected tightly thereto, whereby the magnetic pole axis is perpendicular to said branches.

Yoke members may be provided which are two straight plate-like yokes facing in parallel with each other, and said magnets two permanent magnets which are inserted between said yokes at both ends of said yokes respectively and connected to each other tightly, whereby the magnetic pole axes of both permanent magnets are perpendicular to said yokes and the directions of polarity of both magnetic poles are opposite to each other.

The transferring means may be a transferring rod of non-magnetic material and each of said two permanent magnets with each its own hole opened therein so that said transferring rod is capable of sliding in the longitudinal direction of said yokes.

Yoke members may be two straight plate-like yokes facing in parallel with each other, and said permanent magnets composed of two first permanent magnets and one second permanent magnet, all of which is inserted between said yokes, said two first permanent magnets are positions at both ends and said second permanent magnet at a position between said first permanent magnets and said three permanent magnets are respectively connected to each said yokes tightly, whereby the magnetic pole axes of said three permanent magnets are perpendicular to the plane of said yokes and the directions of polarity of said three magnetic poles are alternatively opposite to each other, thus forming a magnetic circuit composed of two closed magnetic subcircuits connected in series.

The magnetic sensing means may be a pair of magneto-resistive sensing elements arranged in parallel with each other and spaced from each other with a predetermined distance.

The first permanent magnet may be composed of a sub-permanent magnet, a non-magnetic spacer block, and another sub-permanent magnet piled up in recited order and stuck to each other to form said first permanent magnet, and said second permanent magnet is composed of two of said sub-permanent magnets facing each other spaced from each other with a spacing distance sufficient to allow the passage of said magnetic sensing means.

The transferring means may be a transferring rod of non-magnetic material and each of said two first permanent magnets at both ends of said yokes, has each own hole opened in said both non-magnetic spacer blocks so that said transferring rod is capable of sliding in the longitudinal direction of said yokes.

The yoke member may have a pair of circular yokes facing in parallel with each other and having a radially cut off portion with a small gap at the same position, said circular yokes being connected to each other by an end portion of magnetic material at the one side of said small gap, and at another side of said small gap, said permanent magnet being inserted between said circular yokes and connected tightly thereto, whereby the magnetic pole axis is kept perpendicular to said circular yokes.

The circular yokes may be of the same dimension and of washer-like shape, and the surfaces of said circular branch lies on the plane of circle.

The circular yokes may be like a pair of doubled co-axial short cylinder having a large diameter and a small diameter respectively, and the surfaces of said circular yokes are perpendicular to the plane of circle.

The yoke member may be a single circular yoke in which a tapered wedge-like permanent magnet is embedded with a tapered edge orienting toward inside.

The yoke member may comprise a cylinder yoke and a rod yoke which is co-axially surrounded by said cylinder yoke.

A lid of magnetic material may be provided for closing the one end of said cylinder yoke and being magnetically connected to said rod yoke at least with the full of the cross-sectional area of said rod yoke.

The lid may be a permanent magnet ring having a hole co-axially opened and inserted between said cylinder yoke and said rod yoke at the opposite end to said lid so that said permanent magnet ring is connected tightly to the inside wall of said cylinder yoke and the surface of said rod yoke.

The transferring means may comprise a transferring ring being slidable axially along said rod yoke and carrying said magnetic sensor attached thereto.

The magnetic field generating means may be two permanent magnet rings magnetized in its radial direction which are inserted between said cylinder yoke and said rod yoke at both ends of said yokes respectively and connected to each other tightly, whereby the directions of polarity of both magnetic poles are opposite to each other.

The transferring means may be a transferring ring of non-magnetic material, an inner hole of said transferring ring is slidably fitted to said rod yoke, so that said transferring ring is capable of sliding in the axial direction of said rod yoke.

There may be provided a shielding means of magnetic material enclosing entire portion of said position detecting apparatus for magnetically shielding thereof.

Yoke member(s) may have a continuously varying cross-sectional area in the longitudinal direction thereof.

Yoke members may be two straight yokes, inner surfaces of which are facing in parallel with each other, outer surfaces of which are concaved surfaces, and said magnetic field generating means are two permanent magnets which are inserted between said yokes at both ends of said yokes respectively and connected to each other tightly, whereby the magnetic pole axes of both permanent magnets are perpendicular to said yokes and the directions of polarity of both magnetic poles are opposite to each other.

The concaved surface may be V-letter shaped.

The concaved surface may be a curved surface represented by a formula:

$$y = x^{3/2}.$$

The magnetic field generating means may comprise an electromagnet (s).

The electromagnet (s) may comprise an exciting coil and a magnet core of magnetic material which is extended to form said yoke member to complete said closed magnetic circuit.

The closed circuit may comprise two electromagnets whose exciting coils are wound in mutually opposite directions and a long rectangular yoke of magnetic material whose short sides provide said electromagnets with cores thereof.

The electromagnet (s) may be excited by an alternative power supply having a predetermined frequency.

The inside surface of a yoke member of said closed magnetic circuit may have a notched surface.

The notched surface may be a surface having a great number of fine grooves having a specified depth, width and pitch.

The magnetic sensing means may comprise a pair of magnetic sensing elements for sensing a magnetic field, having a compensating function outputting signals of opposite polarities to each other from the respective magnetic sensing elements, and feeding the sum of said output signal voltages as a position detecting signal to the relevant subsequent circuit.

The magnetic sensing means may comprise a pair of magnetic sensing elements arranged in parallel with each other and spaced from each other by a predetermined distance, thus said magnetic sensing means has a function detecting the sensitivity of said magnetic sensing elements.

The magnetic sensing means may comprise a magnetic sensing element and an enclosure made of magnetic material having a magnetic hysteresis characteristic, said magnetic sensing element being enclosed by said enclosure, which may be cylindrical.

The magnetic sensing element may be a magnetoresistive sensing element whose magnetizing axis coincides with easy axis of the magnetization of said enclosure.

The magnetic material of the enclosure may be a resin having magnetizing property.

## Claims

1. Position-detecting apparatus, comprising a magnet (11; 31, 32; 41, 42; 51, 52, 53; 71; 81; 91; 101; 111, 111, 112; 131, 132; 141, 142; 151m, 152m; 171, 172) and a yoke (12; 33, 34; 43, 44; 54, 55; 72; 82; 92; 103, 104; 113, 114; 133, 134; 143; 144; 153; 173, 174) of magnetic material connected to form a closed magnetic circuit suffering leakage of magnetic flux having a non-uniform distribution of field intensity along the yoke, a sensor (15; 56, 57, 58; 175, 178, 179; 185, 180, 181) capable of sensing magnetic field, and transfer means (17; 37, 38; 47; 59; 76, 77; 86, 87; 96, 97; 107, 108; 117, 118; 137; 147; 157; 177) capable of providing relative movement of the sensor along the yoke, whereby the position of the sensor along the yoke is determined from the magnetic field intensity of leakage flux detected by the sensor.

2. Apparatus as claimed in claim 1, wherein the yoke (92) is in the form of an open ring with the magnet (91) closing the ring, for example the magnet being wedge-shaped tapering inwardly of the ring, the transfer means (96, 97) being arranged for moving the sensor around the inner surface of the ring.

3. Apparatus as claimed in claim 1, wherein the yoke comprises two members (12; 33, 34; 43, 44; 54, 55; 72; 82; 133, 134; 143, 144; 153a1, 153a2; 173, 174) which extend along the yoke with a surface of one member confronting a surface of the other member, the transfer means (17; 37, 38;

47; 59; 76, 77; 86, 87) being arranged for moving the sensor (15; 56) along one of those confronting surfaces.

4. Apparatus as claimed in claim 3, wherein the two members, with those surfaces confronting, extend along a straight line or along a curved path (72; 82), for example around or partly around a circle.

5. Apparatus as claimed in claim 1, wherein the yoke comprises an external, for example cylindrical, member (103; 113) and an internal (104; 114), for example rod-like, member arranged within and along the axis of the external member, so that the inner surface of the external member confronts the external surface of the internal member, the transfer means (107, 108; 117, 118) being arranged for moving the sensor along the inner surface.

6. Apparatus as claimed in claim 3, 4 or 5, wherein the two mentioned members (12; 72; 82; 103, 104) are joined together at one end of the yoke, the magnet (11; 71; 81; 101) connecting those members at the other end of the yoke.

7. Apparatus as claimed in claim 3, 4 or 5, wherein the two mentioned members (33, 34; 43, 44; 54, 55; 113, 114; 133, 134; 143, 144; 153; 173, 174) are connected at one end of the yoke by the magnet (31; 41; 51; 111; 131; 141; 151m; 171), and are connected at the other end of the yoke by a further magnet (32; 42; 53; 132; 142, 152m, 172), the polar axes of the respective magnets being oppositely directed from one member to the other.

8. Apparatus as claimed in claim 7, wherein a third magnet (52) is provided between the two members, between the opposite ends of the yoke, to provide two closed magnetic circuits.

9. Apparatus as claimed in any preceding claim, wherein another sensor (58, 181) is provided and the transfer means are arranged for moving this sensor along the same surface as the first-mentioned sensor (57, 180) with a predetermined spacing from the first-mentioned sensor.

10. Apparatus as claimed in any one of claims 3 to 8, wherein a further sensor (179) is provided and the transfer means are arranged for moving the further sensor (179) along the other of the confronting surfaces in concert with movement of the first-mentioned sensor (178).

11. Apparatus as claimed in any preceding claim, wherein the sensor comprises a magnetic sensing element (202) in an enclosure (203) of magnetic material having a hysteresis characteristic.

12. Apparatus as claimed in any preceding claim, wherein the or each magnet (151m, 152m) is an electromagnet.

13. Apparatus as claimed in any preceding claim, having a magnetic shield (121) around the closed magnetic circuit.

14. Apparatus as claimed in any preceding claim, wherein the sensor (15) incorporates a magnetoresistive sensing element of barber-pole type.

15. Apparatus as claimed in any preceding claim, wherein a surface of the yoke is notched (Fig. 46) to encourage magnetic flux leakage detectable by the sensor.

16. Apparatus as claimed in any preceding claim, wherein the cross-sectional thickness of the yoke or of at least one member (133, 134; 143, 144) of the yoke is varied along the length of the yoke, to provide a more linear variation of leakage flux intensity over the length of the yoke.

## Patentansprüche

1. Positionsdetektorvorrichtung, mit einem Magneten (11; 31, 32; 41, 42; 51, 52, 53; 71; 81; 91; 101; 111; 111, 112; 131, 132; 141, 142; 151m, 152m; 171, 172) und einem Joch (12; 33, 34; 43, 44; 54, 55; 72; 82; 92; 103, 104; 113, 114; 133, 134; 143; 144; 153; 173, 174) aus magnetischem Material, welche verbunden sind, um einen geschlossenen Magnetkreis zu bilden, der unter einem Leck des magnetischen Flusses leidet, welches eine ungleichförmige Verteilung der Feldintensität längs des Joches hat, einem Fühler (15; 56, 57, 58; 175, 178, 179; 185, 180, 181), der das Magnetfeld fühlen kann, und einer Transfereinrichtung (17; 37, 38; 47; 59; 76, 77; 86, 87; 96, 97; 107, 108; 117, 118; 137; 147; 157; 177), die eine relative Bewegung des Fühlers längs dem Joch vorsehen kann, wodurch die Position des Fühlers längs dem Joch von der magnetischen Feldintensität des Leckflusses bestimmt wird, welcher von dem Fühler detektiert wird.

2. Vorrichtung nach Anspruch 1, bei der das Joch (92) die Form eines offenen Ringes hat, wobei der Magnet (91) den Ring schließt, zum Beispiel der Magnet keilförmig zum Inneren des Ringes hin abgeschrägt ist, die Transfereinrichtung (96, 97) angeordnet ist, um den Fühler um die innere Oberfläche des Ringes zu bewegen.

3. Vorrichtung nach Anspruch 1, bei der das Joch zwei Teile (12; 33, 34; 43, 44; 54, 55; 72; 82; 133, 134; 143, 144; 153a1, 153a2; 173, 174) umfaßt, welche sich längs dem Joch mit einer Oberfläche des einen Teiles gegenüber einer Oberfläche des anderen Teiles erstrecken, wobei die Transfereinrichtungen (17; 37, 38; 47; 59; 76, 77; 86, 87) angeordnet sind, um den Fühler (15; 56) längs einer der gegenüberliegenden Oberflächen zu bewegen.

4. Vorrichtung nach Anspruch 3, bei der die beiden Teile, mit jenen gegenüberliegenden Oberflächen, sich längs einer geraden Linie oder eines gekrümmten Weges (72; 82), z. B. um oder teilweise um einen Kreis erstrecken.

5. Vorrichtung nach Anspruch 1, bei der das Joch ein externes, z. B. zylindrisches Teil (103; 113) und ein internes (104; 114), z. B. stabförmiges Teil umfaßt, das innerhalb und längs der Achse des externen Teils angeordnet ist, so daß die innere Oberfläche des externen Teils der externen Oberfläche des internen Teils gegenüberliegt, wobei die Transfereinrichtungen (107, 108; 117, 118) angeordnet sind, um den Fühler längs der inneren Oberfläche zu bewegen.

6. Vorrichtung nach Anspruch 3, 4 oder 5, bei der die beiden genannten Teile (12; 72; 82; 103, 104) miteinander an einem Ende des Joches verbunden sind, und der Magnet (11; 71; 81; 101) jene Teile an dem anderen Ende des Joches verbindet.

7. Vorrichtung nach Anspruch 3, 4 oder 5, bei der die genannten Teile (33, 34; 43, 44; 54, 55; 113, 114; 133, 134; 143, 144; 153; 173, 174) an einem Ende des Joches durch den Magneten (31; 41; 51; 111; 131; 141; 151m; 171) verbunden sind, und an dem anderen Ende des Joches durch einen weiteren Magneten (32; 42; 53; 132; 142, 152m, 172) verbunden sind, wobei die polaren Achsen der jeweiligen Magnete von einem Teil zu dem anderen entgegengesetzt gerichtet sind.

8. Vorrichtung nach Anspruch 7, bei der ein dritter Magnet (52) zwischen den beiden Teilen vorgesehen ist, zwischen den gegenüberliegenden Enden des Joches, um zwei geschlossene Magnetkreise zu bilden.

9. Vorrichtung nach einem der vorhergehenen Ansprüche, bei der ein anderer Fühler (58, 181) vorgesehen ist und die Transfereinrichtung angeordnet ist, um diesen Fühler längs der selben Oberfläche wie den erstgenannten Fühler (57, 180) zu führen, mit einem vorbestimmten Abstand von dem erstgenannten Fühler.

10. Vorrichtung nach einem der Ansprüche 3 bis 8, bei der ein weiterer Fühler (179) vorgesehen ist und die Transfereinrichtungen angeordnet sind, um den weiteren Fühler (179) längs der anderen der gegenüberliegenden Oberflächen in Übereinstimmung mit der Bewegung des erstgenannten Fühlers (178) zu bewegen.

11. Vorrichtung nach einem der vorhergehenden Ansprüche, bei der der Fühler ein magnetisches Fühlelement (202) in einer Umhüllung (203) aus magnetischem Material umfaßt, welches eine Hysteresis-Charakteristik hat.

12. Vorrichtung nach einem der vorhergehenden Ansprüche, bei der der oder jeder Magnet (151m, 152m) ein Elektromagnet ist.

13. Vorrichtung nach einem der vorhergehenden Ansprüche, mit einem magnetischen Schirm (121) um den geschlossenen Magnetkreis.

14. Vorrichtung nach einem der vorhergehenden Ansprüche, bei der der Fühler (15) ein magnetoresestives Fühlelement vom Barber-Pol-Typ enthält.

15. Vorrichtung nach einem der vorhergehenden Ansprüche, bei der eine Oberfläche des Joches eingekerbt (Fig. 46) ist, um ein Magnetflußleck zu ermutigen, welches durch den Fühler detektierbar ist.

16. Vorrichtung nach einem der vorhergehenden Ansprüche, bei der eine Querschnittsdicke des Joches oder von wenigstens einem Teil (133, 134; 143, 144) des Joches längs der Länge des Joches variiert ist, um eine mehr lineare Variation der Leckflußintensität über der Länge des Joches vorzusehen.

## Revendications

1. Appareil de détection de position comprenant un aimant (11; 31, 32; 41, 42; 51, 52, 53; 71; 81; 91; 101; 111; 111, 112; 131, 132; 141, 142; 151m, 152m; 171, 172) et une culasse (12; 33, 34; 43, 44; 54, 55; 72; 82; 92; 103, 104; 113, 114; 133, 234; 143; 144; 153; 173, 174) en un matériau magnétique qui est conçu de façon à former un circuit magnétique fermé affecté par une fuite d'intensité de flux magnétique, ayant une distribution d'intensité de champ non uniforme le long de la culasse, un capteur (15; 56, 57, 58; 178, 179; 185, 180, 181) capable de détecter le champ magnétique, et des moyens de transfert (17; 37, 38; 47; 59; 76, 77; 86, 87; 96, 97; 107, 108; 117, 118; 137; 147; 157; 177) capables de produire un mouvement relatif du capteur le long de la culasse, grâce à quoi la position du capteur le long de la culasse est déterminée à partir de l'intensité du champ magnétique du flux de fuite que détecte le capteur.

2. Appareil selon la revendication 1, dans lequel la culasse (92) se présente sous la forme d'un anneau ouvert qui est fermé par l'aimant (91), l'aimant ayant par exemple une forme en coin allant en diminuant vers l'intérieur de l'anneau, et les moyens de transfert (96, 97) sont conçus pour déplacer le capteur le long de la surface intérieure de l'anneau.

3. Appareil selon la revendication 1, dans lequel la culasse comprend deux pièces (12; 33, 34; 43, 44; 54, 55; 72; 82; 133, 134; 143, 144; 153a1, 153a2; 173, 174) qui s'étendent le long de la culasse avec une surface d'une pièce et une surface de l'autre pièce placées en regard, les moyens de transfert (17; 37, 38; 47; 59; 76, 77; 86, 87) étant conçus de façon à déplacer le capteur (15; 56) le long de l'une de ces surfaces en regard.

4. Appareil selon la revendication 3, dans lequel les deux pièces dont les surfaces sont en regard s'étendent le long d'une ligne droite ou d'un chemin courbe (72; 82), par exemple autour ou partiellement autour d'un cercle.

5. Appareil selon la revendication 1, dans lequel la culasse comprend une pièce externe (103; 113), par exemple cylindrique, et une pièce interne (104; 114), par exemple en forme de tige, qui est disposée à l'intérieur de la pièce externe et le long de l'axe de cette dernière, de façon que la surface intérieure de la pièce externe soit en regard de la surface extérieure de la pièce interne, les moyens de transfert (107, 108; 117, 118) étant conçus de façon à déplacer le capteur le long de la surface intérieure.

6. Appareil selon la revendication 3, 4 ou 5, dans lequel les deux pièces précitées (12; 72; 82; 103, 104) sont réunies ensemble à une extrémité de la culasse, tandis que l'aimant (11; 71; 81; 101) relie ces pièces à l'autre extrémité de la culasse.

7. Appareil selon la revendication 3, 4 ou 5, dans lequel les deux pièces précitées (33, 34; 43, 44; 54, 55; 113, 114; 133, 134; 143, 144; 153; 173, 174) sont reliées par l'aimant (31; 41; 51; 111; 131; 151m; 171) à une extrémité de la culasse, et elles sont reliées à l'autre extrémité de la culasse par un aimant supplémentaire (32; 42; 53; 132; 142, 152m, 172), les axes polaires des aimants respectifs étant dirigés de façon opposée d'une pièce vers l'autre.

8. Appareil selon la revendication 7, dans lequel un troisième aimant (52) est placé entre les deux pièces, entre les extrémités opposées de la culasse, pour former deux circuits magnétiques fermés.

9. Appareil selon l'une quelconque des revendications précédentes, dans lequel un autre capteur (58, 181) est incorporé, et les moyens de transfert sont conçus de façon à déplacer ce capteur le long de la même surface que le capteur mentionné en premier (57, 180), avec un écartement prédéterminé par rapport au capteur mentionné en premier.

10. Appareil selon l'une quelconque des revendications 3 à 8, dans lequel un capteur supplémentaire (179) est incorporé, et les moyens de transfert sont conçus de façon à déplacer le capteur supplémentaire (179) le long de l'autre des surfaces en regard, conjointement au mouvement du capteur mentionné en premier (178).

11. Appareil selon l'une quelconque des revendications précédentes, dans lequel le capteur comprend un élément de détection magnétique (202) dans une enceinte (203) en un matériau magnétique ayant une caractéristique d'hystérésis.

12. Appareil selon l'une quelconque des revendications précédentes, dans lequel l'aimant ou chaque aimant (151m, 152m) est un électroaimant.

13. Appareil selon l'une quelconque des revendications précédentes, comportant un blindage magnétique (121) autour du circuit magnétique fermé.

14. Appareil selon l'une quelconque des revendications précédentes, dans lequel le capteur (15) comprend un élément de détection à magnétorésistance du type à couches de métallisation obliques.

15. Appareil selon l'une quelconque des revendications précédentes, dans lequel une surface de la culasse est encochée (figure 46) pour favoriser une fuite de flux magnétique détectable par le capteur.

16. Appareil selon l'une quelconque des revendications précédentes, dans lequel l'épaisseur transversale de la culasse ou d'au moins une pièce (133, 134; 143, 144) de la culasse varie sur la longueur de cette dernière, de façon à procurer une variation plus linéaire de l'intensité du flux de fuite sur la longueur de la culasse.

## FIG. 1

## FIG. 2

# FIG. 3

# FIG. 5

# FIG. 4

# FIG. 6

FIG. 7

FIG. 8

FIG. 9

## FIG. 10

## FIG. 11

## FIG. 12

## FIG. 13

## FIG. 14

transferring distance

FIG. 15

FIG. 16

FIG. 17

FIG. 18

FIG. 19

output signal voltage

transferring distance

magnetic circuit 60

magnetic circuit 6

7

FIG. 20

FIG. 21

FIG. 22

FIG. 23

EP 0 215 454 B1

FIG.24

FIG.25.

FIG.26

(V)

output signal voltage

angular position

FIG.27

FIG.28

FIG.29

FIG.30

output signal voltage (V)

transferring distance (mm)

FIG.31

FIG.32

FIG.33

FIG.34

output signal voltage

transferring position

FIG. 35

FIG. 36

EP 0 215 454 B1

FIG. 37

FIG. 38

magnetic field intensity

0

P₁        P₀        P₂

transferring position

FIG. 39

signal voltage

0

P₁        P₀        P₂

transferring position

13

## FIG.40

## FIG.41

magnetic field intensity

transferring position

## FIG.42

output signal voltage

transferring position

FIG.43

FIG.44

FIG.45

*FIG.46*

*FIG.47*

*FIG.48*

*FIG.49*

## FIG.50

## FIG.51

## FIG.52

## FIG.53

## FIG.54

```
  15              211              212        213
┌──────────┐   ┌──────────┐   ┌──────────┐
│ magnetic │→  │amplifier │→  │comparator│→ ○
│  sensor  │   │          │   │          │
└──────────┘   └──────────┘   └──────────┘
```

## FIG.55

magnetic flux

Q

Hc₂

P

Hc₁

magnetic field intensity

## FIG.56

output signal voltage

X₂

X₁

X₂    X₁

transferring distance

# FIG. 57